# EUROPEAN PATENT APPLICATION

(11) **EP 4 712 531 A1**
(43) Date of publication of application: **18.03.2026**
(21) Application number: 24818367.5
(22) Date of filing: 11.04.2024
(51) Int. Cl.: H04W 12/06

(54) **REMOTE ATTESTATION METHOD AND RELATED DEVICE**

(30) Priority: 07.06.2023 CN 202310672062
(71) Applicant: Huawei Technologies Co., Ltd., Shenzhen, Guangdong 518129 (CN)
(72) Inventor: WANG, Haiguang, Shenzhen, Guangdong 518129 (CN); LI, Tieyan, Shenzhen, Guangdong 518129 (CN); KANG, Xin, Shenzhen, Guangdong 518129 (CN); LEI, Zhongding, Shenzhen, Guangdong 518129 (CN)
(74) Representative: Thun, Clemens
(86) International application number: PCT/CN2024/087174
(87) International publication number: WO 2024/250830

(57) **Abstract**

This application provides a remote attestation method and a related device, to verify a remote attestation report by using a symmetric key of a subscriber identity module (subscriber identity module, SIM), without depending on a digital certificate provided by a certificate authority (certificate authority, CA) server. This can improve reliability of a remote attestation report verification process. In the method, a first apparatus receives request information, where the request information is for requesting a remote attestation report, and the remote attestation report is for remote attestation of the first apparatus. The first apparatus sends first information based on the request information, where the first information includes the remote attestation report and verification information, the verification information is for verifying the remote attestation report, and the verification information is obtained by processing the remote attestation report based on a symmetric key of a SIM in the first apparatus.

## Description

This application claims priority to Chinese Patent Application No. 202310672062.6, filed with the China National Intellectual Property Administration on June 7, 2023, and entitled "REMOTE ATTESTATION METHOD AND RELATED DEVICE", which is incorporated herein by reference in its entirety.

### TECHNICAL FIELD

This application relates to the field of computer technologies, and in particular, to a remote attestation method and a related device.

### BACKGROUND

During operation, a computer device may send a remote attestation report to a remote server (a virtual machine, a container, or the like) that provides a remote attestation service, and then, the remote server may verify and store the remote attestation report. This process is referred to as remote attestation (remote attestation, RA). Remote attestation is an important link in the trusted computing field, and can implement trustworthiness measurement of the computer device.

Currently, before a computer device sends a remote attestation report, the computer device may obtain a digital certificate from a certificate authority (certificate authority, CA) server. Subsequently, the computer device may sign the remote attestation report based on the digital certificate to obtain signature information, and carry the signature information in the process of sending the remote attestation report. The digital certificate issued by the CA server to the device includes a public key owned by the device, a name of the CA server, and a signature provided by the CA server by using a private key owned by the CA server and for the content of the certificate. A third party may use a root certificate of the CA to verify the authenticity of the certificate. Then, the another device may serve as a sender of the remote attestation report, and can sign the remote attestation report by using a private key corresponding to the certificate, and a remote server may verify information included in the remote attestation report by using the certificate.

However, the interaction process of the remote attestation report highly depends on the CA server. If a CA server is unreliable (for example, suffers from an external attack or has a vulnerability in a certificate issuing process), a digital certificate provided by the CA server becomes unreliable, reducing reliability of a verification process implemented based on the digital certificate.

### SUMMARY

This application provides a remote attestation method and a related device, to verify a remote attestation report by using a symmetric key of a SIM, without depending on a digital certificate provided by a CA server. This can improve reliability of a remote attestation report verification process. In addition, the remote attestation report can be verified by reusing a mechanism of performing identity management of the SIM by a network, without deploying the CA server. This simplifies a mechanism of performing verification by using the CA certificate in remote attestation, thereby simplifying network management and improving network management efficiency.

A first aspect of this application provides a remote attestation method. The method is performed by a first apparatus, the method is performed by a part of components (for example, a processor, a chip, or a chip system) in a first apparatus, or the method may be implemented by a logical module or software that can implement all or a part of functions of a first apparatus. In the first aspect and a possible implementation of the first aspect, an example in which the method is performed by the first apparatus is used for description. The first apparatus may be a terminal device or a network device. In the method, a first apparatus receives request information, where the request information is for requesting a remote attestation report, and the remote attestation report is for remote attestation of the first apparatus. The first apparatus sends first information based on the request information, where the first information includes the remote attestation report and verification information, the verification information is for verifying the remote attestation report, and the verification information is obtained by processing the remote attestation report based on a symmetric key of a subscriber identity module (subscriber identity module, SIM) in the first apparatus.

Based on this technical solution, after the first apparatus receives the request information for requesting the remote attestation report, the first apparatus sends, based on the request information, the first information that includes the remote attestation report and the verification information. The verification information is for verifying the remote attestation report, and the verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the first apparatus can verify the remote attestation report by using the symmetric key of the SIM, without depending on a digital certificate provided by a CA server. This can improve reliability of a remote attestation report verification process.

In addition, in this technical solution, the first apparatus can verify the remote attestation report by using the symmetric key of the SIM. This fully uses a mechanism of performing identity management of the SIM by a network, and a mechanism of performing verification by using a CA certificate in remote attestation is simplified, thereby simplifying network management and improving network management efficiency.

In this application, the SIM is a module configured to store/configure identity information and the symmetric key. During actual application, the module may alternatively be implemented by using another name, for example, an identification module, an identity identification module, or a key module. This is not limited herein.

Optionally, the SIM may be further configured to store/configure other information of the first apparatus, for example, the other information may include one or more of the identity information, a mobile country code (mobile country code, MCC), a mobile network code (mobile network code, MNC), a private user identity (private user identity), a public user identity (public user identity), and a short message parameter.

Optionally, the SIM may be implemented by using hardware, or may be implemented by using software. This is not limited herein.

For example, when the SIM is implemented by using hardware, the SIM may include a universal subscriber identity module (universal subscriber identity module, USIM), an internet protocol media service identity module (internet protocol media service identity module, ISIM), or an embedded subscriber identity module (embedded SIM, eSIM).

For another example, when the SIM is implemented by using software, the SIM may include a soft subscriber identity module (softSIM) or a virtual subscriber identity module (virtual SIM, VSIM).

It should be understood that the first apparatus may include one or more SIMs implemented by using hardware, and/or the first apparatus may include one or more SIMs implemented by using software.

It should be understood that the remote attestation report in the first information is for remote attestation of the first apparatus. The remote attestation report may include information (for example, a measurement log and/or a PCR value) obtained through measurement. The remote attestation report may also be referred to as remote attestation evidence, remote evidence, a trusted report, or another name, which is not limited herein. The verification information in the first information is for verifying integrity of the remote attestation report, and/or the verification information in the first information is for verifying validity of the remote attestation report. In addition, in the first information, the remote attestation report and the verification information may be separately encapsulated (or carried) in the first information, or the remote attestation report and the verification information may be integrated and then encapsulated (or carried) in the first information. This is not limited herein.

Optionally, the verification information for verifying the remote attestation report may alternatively be implemented by using another name, for example, a message authentication code (message authentication code, MAC) or an authentication code.

In a possible implementation of the first aspect, the request information includes a random number (nonce); and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

Based on this technical solution, the request information received by the first apparatus may include the random number, and correspondingly, the verification information for verifying the remote attestation report may be obtained by processing the remote attestation report based on the first key generated based on the symmetric key of the SIM and the random number. In this way, the verification information in the first information is obtained based on the symmetric key of the SIM in the first apparatus and the random number carried in the request information, to ensure timeliness of the verification information, and further improve the reliability of the remote attestation report verification process.

In a possible implementation of the first aspect, the first information further includes the random number.

Based on this technical solution, the first information that includes the remote attestation report and the verification information may further include the random number, so that the receiver of the first information can verify the remote attestation report in the first information based on the random number and other information (for example, the symmetric key of the SIM).

In a possible implementation of the first aspect, the remote attestation report is obtained through processing by a first module in the first apparatus; and the first information further includes a first identifier, and the first identifier identifies the SIM and/or the first module.

Based on this technical solution, the remote attestation report in the first information may be obtained through processing by the first module in the first apparatus. The first information may further include the first identifier that identifies the SIM and/or the first module, so that the receiver of the first information can perform verification based on the first identifier by using corresponding information.

For example, the first identifier may include an international mobile subscriber identity (international mobile subscriber identity, IMSI), a generic public subscription identifier (generic public subscription identifier, GPSI), a subscriber user permanent identifier (subscriber user permanent identifier, SUPI), or a mobile subscriber integrated services digital network number (mobile subscriber integrated services digital network number, MSISDN).

In a possible implementation of the first aspect, the first module is a trusted platform module (trusted platform module, TPM); or the first module is a trusted platform control module (trusted platform control module, TPCM); or the first module is a functional module in a TPM; or the first module is a functional module in a TPCM.

Optionally, the first module is integrated into the SIM, or the SIM is integrated into the first module, or both the first module and the SIM are independently disposed modules.

Based on this technical solution, the remote attestation report in the first information may be obtained through processing by the first module in the first apparatus. The first module may be implemented in the foregoing multiple manners, to provide multiple flexible implementations.

A second aspect of this application provides a remote attestation method. The method is performed by a second apparatus, or the method is performed by a part of components (for example, a processor, a chip, or a chip system) in a second apparatus, or the method may be implemented by a logical module or software that can implement all or a part of functions of a second apparatus. In the second aspect and a possible implementation of the second aspect, an example in which the method is performed by the second apparatus is used for description. The second apparatus may be a terminal device or a network device. In the method, the second apparatus sends request information, where the request information is for requesting a remote attestation report, and the remote attestation report is for remote attestation of the first apparatus. The second apparatus receives second information, where the second information indicates a verification result of the remote attestation report, the verification result is obtained by performing verification based on verification information, and the verification information is obtained by processing the remote attestation report based on a symmetric key of a SIM in the first apparatus.

Based on this technical solution, after the second apparatus sends the request information for requesting the remote attestation report, the second apparatus receives the second information that indicates the verification result of the remote attestation report. The verification result is obtained by performing verification based on the verification information, and the verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the remote attestation report can be verified by using the symmetric key of the SIM, without depending on a digital certificate provided by a CA server. This can improve reliability of a remote attestation report verification process.

In addition, in this technical solution, the remote attestation report can be verified by using the symmetric key of the SIM. This fully uses a mechanism of performing identity management of the SIM by a network, and a mechanism of performing verification by using a CA certificate in remote attestation is simplified, thereby simplifying network management and improving network management efficiency.

Optionally, the SIM may be implemented by using hardware, or may be implemented by using software. This is not limited herein.

It should be understood that a remote attestation report in first information may include information (for example, a measurement log and/or a PCR value) obtained through measurement. The remote attestation report may also be referred to as remote attestation evidence, remote evidence, a trusted report, or another name, which is not limited herein. The verification information in the first information is for verifying integrity of the remote attestation report, and/or the verification information in the first information is for verifying validity of the remote attestation report. In addition, in the first information, the remote attestation report and the verification information may be separately encapsulated (or carried) in the first information, or the remote attestation report and the verification information may be integrated and then encapsulated (or carried) in the first information. This is not limited herein.

In a possible implementation of the second aspect, the method further includes: The second apparatus receives the first information, where the first information includes the remote attestation report and the verification information. The second apparatus sends the first information.

Based on this technical solution, as a requester of the remote attestation report, the second apparatus may further receive and send the first information including the remote attestation report and the verification information. In other words, the second apparatus may forward the first information, so that a receiver of the first information can subsequently perform a verification process based on the first information, and send the second information that indicates the verification result to the second apparatus.

In a possible implementation of the second aspect, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

Based on this technical solution, the request information sent by the second apparatus may include the random number, and correspondingly, the verification information for verifying the remote attestation report may be obtained by processing the remote attestation report based on the first key generated based on the symmetric key of the SIM and the random number. In this way, the verification information in the first information is obtained based on the symmetric key of the SIM in the first apparatus and the random number carried in the request information, to ensure timeliness of the verification information, and further improve the reliability of the remote attestation report verification process.

In a possible implementation of the second aspect, the first information further includes the random number.

Based on this technical solution, the first information that includes the remote attestation report and the verification information may further include the random number, so that the receiver of the first information can verify the remote attestation report in the first information based on the random number and other information (for example, the symmetric key of the SIM).

In a possible implementation of the second aspect, the remote attestation report is obtained through processing by a first module in the first apparatus; and the first information further includes a first identifier, and the first identifier identifies the SIM and/or the first module.

Based on this technical solution, the remote attestation report in the first information may be obtained through processing by the first module in the first apparatus. The first information may further include the first identifier that identifies the SIM and/or the first module, so that the receiver of the first information can perform verification based on the first identifier by using corresponding information.

In a possible implementation of the second aspect, the first module is a trusted platform module TPM; or the first module is a trusted platform control module TPCM; or the first module is a functional module in a TPM; or the first module is a functional module in a TPCM.

Optionally, the first module is integrated into the SIM, or the SIM is integrated into the first module, or both the first module and the SIM are independently disposed modules.

Based on this technical solution, the remote attestation report in the first information may be obtained through processing by the first module in the first apparatus. The first module may be implemented in the foregoing multiple manners, to provide multiple flexible implementations.

A third aspect of this application provides a remote attestation method. The method is performed by a second apparatus, or the method is performed by a part of components (for example, a processor, a chip, or a chip system) in a second apparatus, or the method may be implemented by a logical module or software that can implement all or a part of functions of a second apparatus. In the third aspect and a possible implementation of the third aspect, an example in which the method is performed by the second apparatus is used for description. The second apparatus may be a terminal device or a network device. In this method, the second apparatus sends request information, where the request information is for requesting a remote attestation report, and the remote attestation report is for remote attestation of the first apparatus. The second apparatus receives first information, where the first information includes the remote attestation report and verification information, and the verification information is obtained by processing the remote attestation report based on a symmetric key of a subscriber identity module SIM in the first apparatus. The second apparatus verifies the verification information to obtain a verification result of the remote attestation report.

Based on this technical solution, after the second apparatus sends the request information for requesting the remote attestation report, and after the second apparatus receives the first information including the remote attestation report and the verification information, the second apparatus can verify the verification information to obtain the verification result of the remote attestation report. The verification result is obtained by performing verification based on the verification information, and the verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the remote attestation report can be verified by using the symmetric key of the SIM, without depending on a digital certificate provided by a CA server. This can improve reliability of a remote attestation report verification process.

In addition, in this technical solution, the remote attestation report can be verified by using the symmetric key of the SIM. This fully uses a mechanism of performing identity management of the SIM by a network, and a mechanism of performing verification by using a CA certificate in remote attestation is simplified, thereby simplifying network management and improving network management efficiency.

Optionally, the SIM may be implemented by using hardware, or may be implemented by using software. This is not limited herein.

It should be understood that a remote attestation report in first information may include information (for example, a measurement log and/or a PCR value) obtained through measurement. The remote attestation report may also be referred to as remote attestation evidence, remote evidence, a trusted report, or another name, which is not limited herein. The verification information in the first information is for verifying integrity of the remote attestation report, and/or the verification information in the first information is for verifying validity of the remote attestation report. In addition, in the first information, the remote attestation report and the verification information may be separately encapsulated (or carried) in the first information, or the remote attestation report and the verification information may be integrated and then encapsulated (or carried) in the first information. This is not limited herein.

In a possible implementation of the third aspect, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

Based on this technical solution, the request information sent by the second apparatus may include the random number, and correspondingly, the verification information for verifying the remote attestation report may be obtained by processing the remote attestation report based on the first key generated based on the symmetric key of the SIM and the random number. In this way, the verification information in the first information is obtained based on the symmetric key of the SIM in the first apparatus and the random number carried in the request information, to ensure timeliness of the verification information, and further improve the reliability of the remote attestation report verification process.

In a possible implementation of the third aspect, the first information further includes the random number.

Based on this technical solution, the first information that includes the remote attestation report and the verification information may further include the random number, so that the receiver of the first information (for example, the second apparatus) can verify the remote attestation report in the first information based on the random number and other information (for example, the symmetric key of the SIM).

In a possible implementation of the third aspect, the method further includes: The second apparatus sends third information based on the first information, and receives fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key.

Correspondingly, that the second apparatus verifies the verification information to obtain the verification result of the remote attestation report includes: The second apparatus verifies the verification information based on the fourth information to obtain the verification result of the remote attestation report.

Based on this technical solution, the second apparatus may further obtain, through interaction of the third information and the fourth information, the fourth information that indicates the symmetric key of the SIM or the first key, and subsequently, may determine the verification result based on the fourth information.

In a possible implementation of the third aspect, the remote attestation report is obtained through processing by a first module in the first apparatus. The first information further includes a first identifier, and the first identifier identifies the SIM and/or the first module.

Based on this technical solution, the remote attestation report in the first information may be obtained through processing by the first module in the first apparatus. The first information may further include the first identifier that identifies the SIM and/or the first module, so that the receiver of the first information can perform verification based on the first identifier by using corresponding information.

Optionally, the third information and/or the fourth information may also include the first identifier.

In a possible implementation of the third aspect, the first module is a trusted platform module TPM; or the first module is a trusted platform control module TPCM; or the first module is a functional module in a TPM; or the first module is a functional module in a TPCM.

Optionally, the first module is integrated into the SIM, or the SIM is integrated into the first module, or both the first module and the SIM are independently disposed modules.

Based on this technical solution, the remote attestation report in the first information may be obtained through processing by the first module in the first apparatus. The first module may be implemented in the foregoing multiple manners, to provide multiple flexible implementations.

A fourth aspect of this application provides a remote attestation method. The method is performed by a third apparatus, or the method is performed by a part of components (for example, a processor, a chip, or a chip system) in a third apparatus, or the method may be implemented by a logical module or software that can implement all or a part of functions of a third apparatus. In the fourth aspect and a possible implementation of the fourth aspect, an example in which the method is performed by the third apparatus is used for description. The third apparatus may be a terminal device or a network device. In the method, the third apparatus receives first information, where the first information includes the remote attestation report and verification information, the verification information is for verifying the remote attestation report, and the verification information is obtained by processing the remote attestation report based on a symmetric key of a subscriber identity module SIM in the first apparatus. The third apparatus sends second information, where the second information indicates a verification result of the remote attestation report, and the verification result is obtained by performing verification based on the verification information.

Based on this technical solution, after the third apparatus receives the first information including the remote attestation report and the verification information, the third apparatus can obtain the verification result by performing verification based on the verification information, and the third apparatus sends the second information that indicates the verification result of the remote attestation report. The verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the remote attestation report can be verified by using the symmetric key of the SIM, without depending on a digital certificate provided by a CA server. This can improve reliability of a remote attestation report verification process.

In addition, in this technical solution, the remote attestation report can be verified by using the symmetric key of the SIM. This fully uses a mechanism of performing identity management of the SIM by a network, and a mechanism of performing verification by using a CA certificate in remote attestation is simplified, thereby simplifying network management and improving network management efficiency.

Optionally, the SIM may be implemented by using hardware, or may be implemented by using software. This is not limited herein.

It should be understood that a remote attestation report in first information may include information (for example, a measurement log and/or a PCR value) obtained through measurement. The remote attestation report may also be referred to as remote attestation evidence, remote evidence, a trusted report, or another name, which is not limited herein. The verification information in the first information is for verifying integrity of the remote attestation report, and/or the verification information in the first information is for verifying validity of the remote attestation report. In addition, in the first information, the remote attestation report and the verification information may be separately encapsulated (or carried) in the first information, or the remote attestation report and the verification information may be integrated and then encapsulated (or carried) in the first information. This is not limited herein.

In a possible implementation of the fourth aspect, before sending the second information, the method further includes: The third apparatus sends third information based on the first information, and receives fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting a first key, the fourth information indicates the first key, the third information includes a random number, the first key is generated based on the symmetric key of the SIM and the random number, and the verification result is obtained by performing verification based on the verification information and the first key.

Based on this technical solution, the third apparatus may further obtain, through interaction of the third information and the fourth information, the fourth information that indicates the symmetric key of the SIM or the first key, and subsequently, may determine the verification result based on the fourth information.

In a possible implementation of the fourth aspect, the remote attestation report is obtained through processing by a first module in the first apparatus. The first information further includes a first identifier, and the first identifier identifies the SIM and/or the first module.

Based on this technical solution, the remote attestation report in the first information may be obtained through processing by the first module in the first apparatus. The first information may further include the first identifier that identifies the SIM and/or the first module, so that the receiver of the first information can perform verification based on the first identifier by using corresponding information.

Optionally, the third information and/or the fourth information may also include the first identifier.

In a possible implementation of the fourth aspect, the first module is a trusted platform module TPM; or the first module is a trusted platform control module TPCM; or the first module is a functional module in a TPM; or the first module is a functional module in a TPCM.

Optionally, the first module is integrated into the SIM, or the SIM is integrated into the first module, or both the first module and the SIM are independently disposed modules.

Based on this technical solution, the remote attestation report in the first information may be obtained through processing by the first module in the first apparatus. The first module may be implemented in the foregoing multiple manners, to provide multiple flexible implementations.

A fifth aspect of this application provides a remote attestation method. The method is performed by a fourth apparatus, or the method is performed by a part of components (for example, a processor, a chip, or a chip system) in a fourth apparatus, or the method may be implemented by a logical module or software that can implement all or a part of functions of a fourth apparatus. In the fifth aspect and a possible implementation of the fifth aspect, an example in which the method is performed by the fourth apparatus is used for description. The fourth apparatus may be a terminal device or a network device. In the method, the fourth apparatus receives the third information. The fourth apparatus sends the fourth information. The third information is for requesting a symmetric key of a subscriber identity module SIM, the fourth information indicates the symmetric key of the SIM, the symmetric key of the SIM is for processing a remote attestation report to obtain verification information, and the verification information is for verifying the remote attestation report. Alternatively, the third information is for requesting a first key, the fourth information indicates the first key, the third information includes a random number, the first key is generated based on a symmetric key of a SIM and the random number, the first key is for processing a remote attestation report to obtain verification information, and the verification information is for verifying the remote attestation report.

Based on this technical solution, the fourth apparatus may send, through interaction between the third information and the fourth information, the fourth information that indicates the symmetric key of the SIM or the first key, so that a receiver of the fourth information can verify the remote attestation report based on verification information corresponding to the symmetric key of the SIM or the first key. The verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the remote attestation report can be verified by using the symmetric key of the SIM, without depending on a digital certificate provided by a CA server. This can improve reliability of a remote attestation report verification process.

In addition, in this technical solution, the remote attestation report can be verified by using the symmetric key of the SIM. This fully uses a mechanism of performing identity management of the SIM by a network, and a mechanism of performing verification by using a CA certificate in remote attestation is simplified, thereby simplifying network management and improving network management efficiency.

Optionally, the SIM may be implemented by using hardware, or may be implemented by using software. This is not limited herein.

It should be understood that the verification information is for verifying integrity of the remote attestation report, and/or the verification information is for verifying validity of the remote attestation report.

In a possible implementation of the fifth aspect, the remote attestation report is obtained through processing by a first module in the first apparatus. The third information further includes a first identifier, and the first identifier identifies the SIM and/or the first module.

Based on this technical solution, the remote attestation report may be obtained through processing by the first module in the first apparatus. The third information may further include the first identifier that identifies the SIM and/or the first module, so that the receiver of the third information (for example, the fourth apparatus) can perform verification based on the first identifier by using corresponding information.

In a possible implementation of the fifth aspect, the first module is a trusted platform module TPM; or the first module is a trusted platform control module TPCM; or the first module is a functional module in a TPM; or the first module is a functional module in a TPCM.

Optionally, the first module is integrated into the SIM, or the SIM is integrated into the first module, or both the first module and the SIM are independently disposed modules.

Based on this technical solution, the remote attestation report in the first information may be obtained through processing by the first module in the first apparatus. The first module may be implemented in the foregoing multiple manners, to provide multiple flexible implementations.

A sixth aspect of this application provides an apparatus. The apparatus may implement the method according to any one of the first aspect or the possible implementations of the first aspect. The communication apparatus includes a corresponding unit or module configured to perform the foregoing method. The unit or module included in the communication apparatus may be implemented by software and/or hardware. For example, the apparatus may be a terminal device (or a network device), or the apparatus may be a component (for example, a processor, a chip, or a chip system) in a terminal device (or a network device), or the apparatus may be a logical module or software that can implement all or a part of functions of the terminal device (or the network device).

The apparatus includes a processing unit and a transceiver unit. The transceiver unit is configured to receive request information, where the request information is for requesting a remote attestation report, and the remote attestation report is for remote attestation of the first apparatus. The processing unit is configured to determine first information based on the request information. The transceiver unit is further configured to send the first information. The first information includes the remote attestation report and verification information, the verification information is for verifying the remote attestation report, and the verification information is obtained by processing the remote attestation report based on a symmetric key of a subscriber identity module SIM in the first apparatus.

In a possible implementation of the sixth aspect, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation of the sixth aspect, the first information further includes the random number.

In a possible implementation of the sixth aspect, the remote attestation report is obtained through processing by a first module in the first apparatus. The first information further includes a first identifier, and the first identifier identifies the SIM and/or the first module.

In a possible implementation of the sixth aspect, the first module is a trusted platform module TPM; or the first module is a trusted platform control module TPCM; or the first module is a functional module in a TPM; or the first module is a functional module in a TPCM.

In a possible implementation of the sixth aspect, the SIM includes a universal subscriber identity module USIM, an internet protocol media service identity module ISIM, an embedded subscriber identity module eSIM, or a soft subscriber identity module softSIM.

In a possible implementation of the sixth aspect, the verification information is for verifying integrity of the remote attestation report, and/or the verification information is for verifying validity of the remote attestation report.

In the sixth aspect of this application, a component module of the communication apparatus may be further configured to perform the steps performed in the possible implementations of the first aspect, and achieve corresponding technical effects. For details, refer to the first aspect. Details are not described herein again.

A seventh aspect of this application provides an apparatus. The apparatus may implement the method according to any one of the second aspect or the possible implementations of the second aspect. The communication apparatus includes a corresponding unit or module configured to perform the foregoing method. The unit or module included in the communication apparatus may be implemented by software and/or hardware. For example, the apparatus may be a terminal device (or a network device), or the apparatus may be a component (for example, a processor, a chip, or a chip system) in a terminal device (or a network device), or the apparatus may be a logical module or software that can implement all or a part of functions of the terminal device (or the network device).

The apparatus includes a processing unit and a transceiver unit. The processing unit is configured to determine request information. The transceiver unit is configured to send the request information. The request information is for requesting a remote attestation report, and the remote attestation report is for remote attestation of the first apparatus. The transceiver unit is further configured to receive second information, where the second information indicates a verification result of the remote attestation report, the verification result is obtained by performing verification based on verification information, and the verification information is obtained by processing the remote attestation report based on a symmetric key of a SIM in the first apparatus.

In a possible implementation of the seventh aspect, the transceiver unit is further configured to receive first information, where the first information includes the remote attestation report and the verification information. The transceiver unit is further configured to send the first information.

In a possible implementation of the seventh aspect, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation of the seventh aspect, the first information further includes the random number.

In a possible implementation of the seventh aspect, the remote attestation report is obtained through processing by a first module in the first apparatus. The first information further includes a first identifier, and the first identifier identifies the SIM and/or the first module.

In a possible implementation of the seventh aspect, the first module is a trusted platform module TPM; or the first module is a trusted platform control module TPCM; or the first module is a functional module in a TPM; or the first module is a functional module in a TPCM.

In a possible implementation of the seventh aspect, the SIM includes a universal subscriber identity module USIM, an internet protocol media service identity module ISIM, an embedded subscriber identity module eSIM, or a soft subscriber identity module softSIM.

In a possible implementation of the seventh aspect, the verification information is for verifying integrity of the remote attestation report, and/or the verification information is for verifying validity of the remote attestation report.

In the seventh aspect of this application, a component module of the communication apparatus may be further configured to perform the steps performed in the possible implementations of the second aspect, and achieve corresponding technical effects. For details, refer to the second aspect. Details are not described herein again.

An eighth aspect of this application provides an apparatus. The apparatus may implement the method according to any one of the third aspect or the possible implementations of the third aspect. The communication apparatus includes a corresponding unit or module configured to perform the foregoing method. The unit or module included in the communication apparatus may be implemented by software and/or hardware. For example, the apparatus may be a terminal device (or a network device), or the apparatus may be a component (for example, a processor, a chip, or a chip system) in a terminal device (or a network device), or the apparatus may be a logical module or software that can implement all or a part of functions of the terminal device (or the network device).

The apparatus includes a processing unit and a transceiver unit. The transceiver unit is configured to send request information, where the request information is for requesting a remote attestation report, and the remote attestation report is for remote attestation of the first apparatus. The transceiver unit is further configured to receive the first information, where the first information includes the remote attestation report and verification information, and the verification information is obtained by processing the remote attestation report based on a symmetric key of a subscriber identity module SIM in the first apparatus. The processing unit is configured to verify the verification information to obtain a verification result of the remote attestation report.

In a possible implementation of the eighth aspect, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation of the eighth aspect, the first information further includes the random number.

In a possible implementation of the eighth aspect, the transceiver unit is further configured to send third information based on the first information, and receive fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key. The processing unit is specifically configured to verify the verification information based on the fourth information, to obtain the verification result of the remote attestation report.

In a possible implementation of the eighth aspect, the remote attestation report is obtained through processing by a first module in the first apparatus. The first information further includes a first identifier, and the first identifier identifies the SIM and/or the first module.

In a possible implementation of the eighth aspect, the first module is a trusted platform module TPM; or the first module is a trusted platform control module TPCM; or the first module is a functional module in a TPM; or the first module is a functional module in a TPCM.

In the eighth aspect of this application, a component module of the communication apparatus may be further configured to perform the steps performed in the possible implementations of the third aspect, and achieve corresponding technical effects. For details, refer to the third aspect. Details are not described herein again.

A ninth aspect of this application provides an apparatus. The apparatus may implement the method according to any one of the fourth aspect or the possible implementations of the fourth aspect. The communication apparatus includes a corresponding unit or module configured to perform the foregoing method. The unit or module included in the communication apparatus may be implemented by software and/or hardware. For example, the apparatus may be a terminal device (or a network device), or the apparatus may be a component (for example, a processor, a chip, or a chip system) in a terminal device (or a network device), or the apparatus may be a logical module or software that can implement all or a part of functions of the terminal device (or the network device).

The apparatus includes a processing unit and a transceiver unit. The transceiver unit is configured to receive first information, where the first information includes the remote attestation report and verification information, the verification information is for verifying the remote attestation report, and the verification information is obtained by processing the remote attestation report based on a symmetric key of a subscriber identity module SIM in the first apparatus. The processing unit is configured to determine second information. The transceiver unit is further configured to send second information, where the second information indicates a verification result of the remote attestation report, and the verification result is obtained by performing verification based on the verification information.

In a possible implementation of the ninth aspect, the transceiver unit is further configured to send third information based on the first information, and receive fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key.

In a possible implementation of the ninth aspect, the remote attestation report is obtained through processing by a first module in the first apparatus. The first information further includes a first identifier, and the first identifier identifies the SIM and/or the first module.

In a possible implementation of the ninth aspect, the third information further includes a first identifier, and the first identifier identifies the SIM and/or the first module.

In a possible implementation of the ninth aspect, the first module is a trusted platform module TPM; or the first module is a trusted platform control module TPCM; or the first module is a functional module in a TPM; or the first module is a functional module in a TPCM.

In a possible implementation of the ninth aspect, the SIM includes a universal subscriber identity module USIM, an internet protocol media service identity module ISIM, an embedded subscriber identity module eSIM, or a soft subscriber identity module softSIM.

In a possible implementation of the ninth aspect, the verification information is for verifying integrity of the remote attestation report, and/or the verification information is for verifying validity of the remote attestation report.

In the ninth aspect of this application, a component module of the communication apparatus may be further configured to perform the steps performed in the possible implementations of the fourth aspect, and achieve corresponding technical effects. For details, refer to the fourth aspect. Details are not described herein again.

A tenth aspect of this application provides an apparatus. The apparatus can implement the method according to any one of the fifth aspect or the possible implementations of the fifth aspect. The communication apparatus includes a corresponding unit or module configured to perform the foregoing method. The unit or module included in the communication apparatus may be implemented by software and/or hardware. For example, the apparatus may be a terminal device (or a network device), or the apparatus may be a component (for example, a processor, a chip, or a chip system) in a terminal device (or a network device), or the apparatus may be a logical module or software that can implement all or a part of functions of the terminal device (or the network device).

The apparatus includes a processing unit and a transceiver unit. The transceiver unit is configured to receive third information. The processing unit is configured to determine fourth information. The transceiver unit is further configured to send the fourth information. The third information is for requesting a symmetric key of a subscriber identity module SIM, the fourth information indicates the symmetric key of the SIM, the symmetric key of the SIM is for processing a remote attestation report to obtain verification information, and the verification information is for verifying the remote attestation report. Alternatively, the third information is for requesting a first key, the fourth information indicates the first key, the third information includes a random number, the first key is generated based on a symmetric key of a SIM and the random number, the first key is for processing a remote attestation report to obtain verification information, and the verification information is for verifying the remote attestation report.

In a possible implementation of the tenth aspect, the remote attestation report is obtained through processing by a first module in the first apparatus. The third information further includes a first identifier, and the first identifier identifies the SIM and/or the first module.

In a possible implementation of the tenth aspect, the first module is a trusted platform module TPM; or the first module is a trusted platform control module TPCM; or the first module is a functional module in a TPM; or the first module is a functional module in a TPCM.

In a possible implementation of the tenth aspect, the SIM includes a universal subscriber identity module USIM, an internet protocol media service identity module ISIM, an embedded subscriber identity module eSIM, or a soft subscriber identity module softSIM.

In a possible implementation of the tenth aspect, the verification information is for verifying integrity of the remote attestation report, and/or the verification information is for verifying validity of the remote attestation report.

In the tenth aspect of this application, a component module of the communication apparatus may be further configured to perform the steps performed in the possible implementations of the fourth aspect, and achieve corresponding technical effects. For details, refer to the fourth aspect. Details are not described herein again.

An eleventh aspect of this application provides an apparatus, including at least one processor. The at least one processor is coupled to a memory, the memory is configured to store a program or instructions, and the at least one processor is configured to execute the program or the instructions, to cause the apparatus to implement the method according to any one of the first aspect or the possible implementations of the first aspect.

A twelfth aspect of this application provides an apparatus, including at least one processor. The at least one processor is coupled to a memory, the memory is configured to store a program or instructions, and the at least one processor is configured to execute the program or the instructions, to cause the apparatus to implement the method according to any one of the second aspect or the possible implementations of the second aspect.

A thirteenth aspect of this application provides an apparatus, including at least one processor. The at least one processor is coupled to a memory, the memory is configured to store a program or instructions, and the at least one processor is configured to execute the program or the instructions, to cause the apparatus to implement the method according to any one of the third aspect or the possible implementations of the third aspect.

A fourteenth aspect of this application provides an apparatus, including at least one processor. The at least one processor is coupled to a memory, the memory is configured to store a program or instructions, and the at least one processor is configured to execute the program or the instructions, to cause the apparatus to implement the method according to any one of the fourth aspect or the possible implementations of the fourth aspect.

A fifteenth aspect of this application provides an apparatus, including at least one processor. The at least one processor is coupled to a memory, the memory is configured to store a program or instructions, and the at least one processor is configured to execute the program or the instructions, to cause the apparatus to implement the method according to any one of the fifth aspect or the possible implementations of the fifth aspect.

A sixteenth aspect of embodiments of this application provides an apparatus, including at least one logic circuit and an input/output interface. The logic circuit is configured to perform the method according to any one of the first aspect or the possible implementations of the first aspect.

A seventeenth aspect of embodiments of this application provides an apparatus, including at least one logic circuit and an input/output interface. The logic circuit is configured to perform the method according to any one of the second aspect or the possible implementations of the second aspect.

An eighteenth aspect of embodiments of this application provides an apparatus, including at least one logic circuit and an input/output interface. The logic circuit is configured to perform the method according to any one of the third aspect or the possible implementations of the third aspect.

A nineteenth aspect of embodiments of this application provides an apparatus, including at least one logic circuit and an input/output interface. The logic circuit is configured to perform the method according to any one of the fourth aspect or the possible implementations of the fourth aspect.

A twentieth aspect of embodiments of this application provides an apparatus, including at least one logic circuit and an input/output interface. The logic circuit is configured to perform the method according to any one of the fifth aspect or the possible implementations of the fifth aspect.

A twenty-first aspect of embodiments of this application provides a system. The system includes at least two apparatuses of the apparatus according to the sixth aspect, the apparatus according to the seventh aspect, the apparatus according to the eighth aspect, the apparatus according to the ninth aspect, and the apparatus according to the tenth aspect.

Alternatively, the system includes at least two apparatuses of the apparatus according to the eleventh aspect, the apparatus according to the twelfth aspect, the apparatus according to the thirteenth aspect, the apparatus according to the fourteenth aspect, and the apparatus according to the fifteenth aspect.

Alternatively, the system includes at least two apparatuses of the apparatus according to the sixteenth aspect, the apparatus according to the seventeenth aspect, the apparatus according to the eighteenth aspect, the apparatus according to the nineteenth aspect, and the apparatus according to the twentieth aspect.

A twenty-second aspect of embodiments of this application provides a computer-readable storage medium. The computer-readable storage medium is configured to store one or more computer-executable instructions. When the computer-executable instructions are executed by a processor, the processor performs the method according to any one of the possible implementations of the first aspect to the fifth aspect.

A twenty-third aspect of embodiments of this application provides a computer program product (or referred to as a computer program). The computer program product includes instructions. When the instructions in the computer program product are executed by the processor, the processor performs the method according to any one of the possible implementations of the first aspect to the fifth aspect.

A twenty-fourth aspect of embodiments of this application provides a chip system. The chip system includes at least one processor, configured to support an apparatus in implementing the method according to any one of the possible implementations of the first aspect to the fifth aspect.

In a possible design, the chip system may further include a memory. The memory is configured to store program instructions and data that are necessary for the apparatus. The chip system may include a chip, or may include a chip and another discrete component. Optionally, the chip system further includes an interface circuit, and the interface circuit provides program instructions and/or data for the at least one processor.

For technical effect brought by any design of the sixth aspect to the twenty-fourth aspect, refer to technical effect brought by different designs of the first aspect to the fifth aspect. Details are not described herein again.

### BRIEF DESCRIPTION OF DRAWINGS

FIG. 1a is a diagram of trustworthiness measurement according to this application;
FIG. 1b is another diagram of trustworthiness measurement according to this application;
FIG. 2 is another diagram of trustworthiness measurement according to this application;
FIG. 3 is a diagram of a remote attestation method according to this application;
FIG. 4a is a diagram of a remote attestation method according to this application;
FIG. 4b is a diagram of a remote attestation method according to this application;
FIG. 5A and FIG. 5B are a diagram of application of a remote attestation method according to this application;
FIG. 6a is a diagram of a remote attestation method according to this application;
FIG. 6b is another diagram of a remote attestation method according to this application;

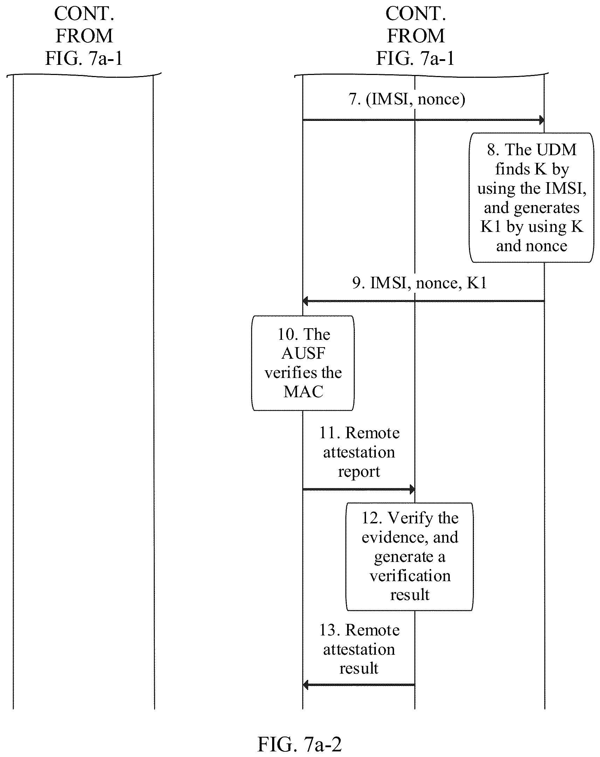

FIG. 7a-1 and FIG. 7a-2 are a diagram of application of a remote attestation method according to this application;

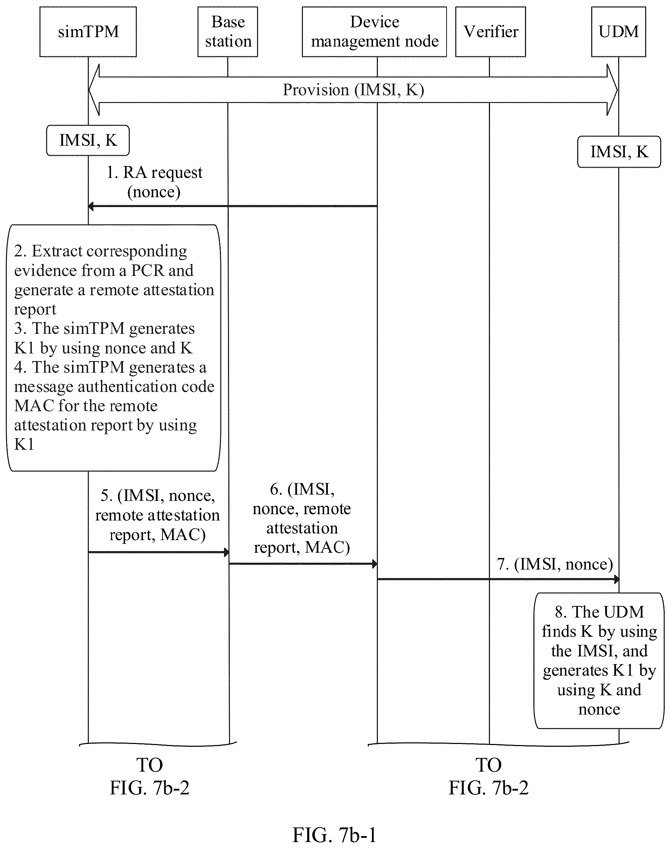

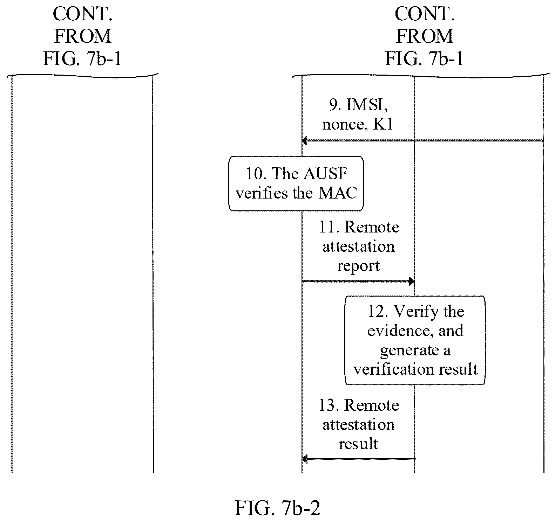

FIG. 7b-1 and FIG. 7b-2 are a diagram of application of a remote attestation method according to this application;

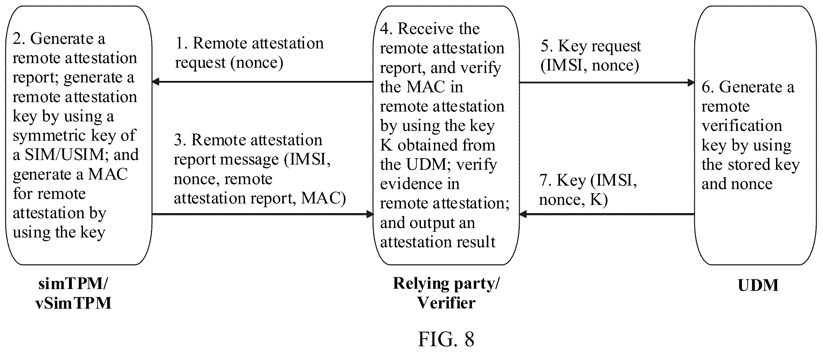

FIG. 8 is a diagram of application of a remote attestation method according to this application;

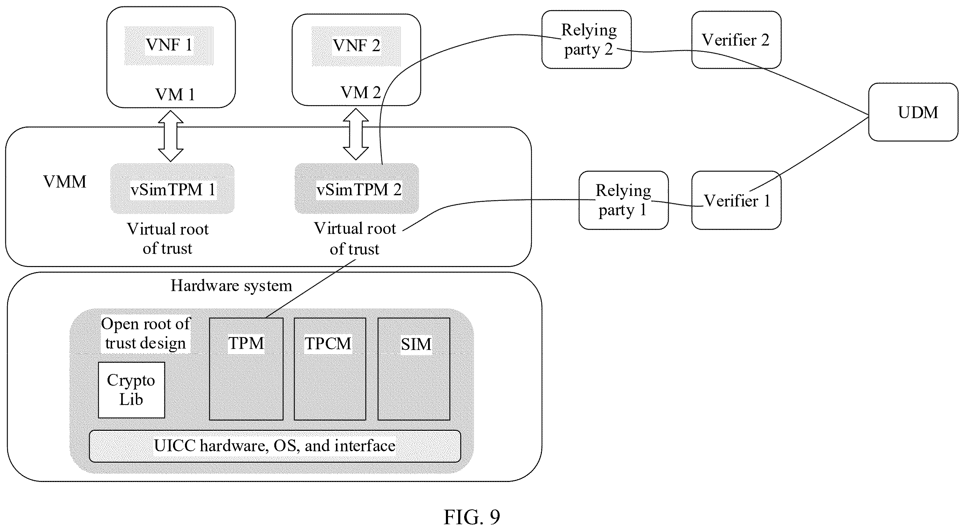

FIG. 9 is a diagram of application of a remote attestation method according to this application;

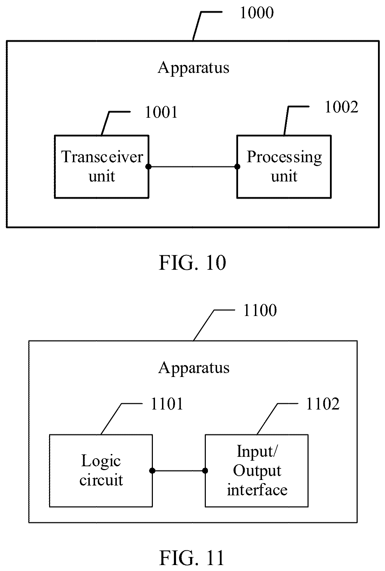

FIG. 10 is a diagram of an apparatus according to this application;
FIG. 11 is another diagram of an apparatus according to this application; and

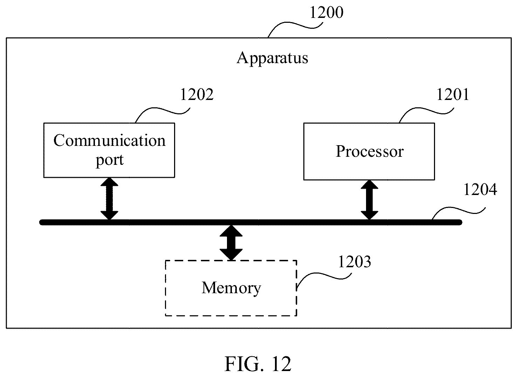

FIG. 12 is another diagram of an apparatus according to this application.

### DESCRIPTION OF EMBODIMENTS

First, terms in embodiments of this application are explained and described, to facilitate understanding by a person skilled in the art.
1. Root of trust (root of trust, RoT): The RoT is generally a component including hardware, firmware, or software, and performing key security functions (for example, verification, measurement, storage, reporting, and upgrading), and security of the RoT needs to be unconditionally trusted. As a system cannot detect abnormal behavior of the root of trust, it is necessary to assume that the root of trust can perform its functions in an expected way at all times.
2. Chain of trust: The chain of trust is generally a transitive trust relationship starting from a root of trust. The root of trust is used as an anchor for propagating the trust relationship. When a software module verifies or measures a next module and retains a reportable verification record for the verification, a trust relationship can be propagated to the verified or measured module.
3. Measured boot: A core root of trust for measurement (core root of trust for measurement, CRTM) loaded by a security core is a segment of read-only code. This segment of code is required to be started first after the system is powered on, and has a function of measuring next-layer software BIOS and recording (extending) a measurement value of the next-layer software BIOS into a PCR of a trusted platform module (trusted platform module, TPM) chip. A chain of trust of the measured boot is as follows: CRTM -> basic input output system (basic input output system, BIOS) -> bootloader (translated as a boot loader, where the bootloader is the first segment of code executed by an embedded system after power-on; and after completing initialization of a processor and related hardware, the bootloader loads an image of an operating system into a memory, jumps to space in which the operating system is located, and starts running of the operating system) -> operating system kernel (operation system kernel, OS kernel).
   After next-layer startup code is loaded at each layer of the chain of trust, according to the processing principle of measurement followed by extension and then start, before next-layer software is started, a measurement value (for example, a hash value) of the next-layer software is extended to a value of a platform configuration register (platform configuration register, PCR) of a TPM chip. Measurement values and an extension sequence of all software at each layer are recorded in a stored measurement log (stored measurement log, SML). The whole startup process is referred to as a measured boot.
4. Remote attestation: After a measured boot is completed, a remote attestation client program obtains a remote attestation report (also referred to as an integrity measurement report, which includes, for example, a stored measurement log and PCR values, and optionally, signature information for verification) and sends the remote attestation report to a remote server for verification. This process is generally referred to as remote attestation (remote attestation, RA).
5. Trusted boot: The trusted boot is generally a combination of a measured boot and remote attestation, and can implement integrity measurement and extension of a device boot process, generation of remote attestation reports, and verification of remote attestation reports. The combination of the two processes is referred to as a trusted boot (Trusted Boot).
6. Terminal device: The terminal device may be a wireless terminal device that can receive scheduling and indication information of a network device. The wireless terminal device may be a device that provides a user with voice and/or data connectivity, a handheld device with a wireless connection function, or another processing device connected to a wireless modem.

For example, the terminal device may be various communication kits (communication kit, where the kit may include, for example, an antenna, a power supply kit, a cable, and a Wi-Fi module) having a wireless communication function. The terminal device may alternatively be a communication module having a satellite communication function, a satellite phone, or a component thereof, or a very small aperture terminal (very small aperture terminal, VSAT). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus, which exchanges voice and/or data with a radio access network. For example, the terminal device is a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile console (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, or the like. The terminal device may alternatively be a wearable device and a terminal device in a next-generation communication system, for example, a terminal device in a 6G communication system or a terminal device in a future evolved public land mobile network (public land mobile network, PLMN). Certainly, the terminal device in this application may alternatively be a chip, a modem, a system on a chip (system on a chip, SoC), or a communication platform that may include a radio frequency (radio frequency, RF) part or the like, which are mainly responsible for a related communication function in the device.

7. Network device: The network device may include a device in a wireless network. For example, the network device may be a radio access network (radio access network, RAN) node (or device) that connects a terminal device to a wireless network, and may also be referred to as a base station. Currently, some examples of the RAN device are: a next-generation base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

In addition, the network device may further include a core network device. The core network device includes, for example, an access and mobility management function (access and mobility management function, AMF), a user plane function (user plane function, UPF), or a session management function (session management function, SMF).

It should be understood that the terminal device and the network device in this application may be applied to a plurality of communication systems. For example, the communication system may include a 4th generation (4th generation, 4G) mobile communication system, a 5th generation (5th generation, 5G) mobile communication system, or a future-oriented evolution system (for example, a 6G mobile communication system). Alternatively, the communication system may further include an open access network (open RAN, O-RAN or ORAN), a cloud radio access network (cloud radio access network, CRAN), or the like. Alternatively, the communication system may include a communication system that integrates the foregoing two or more systems.

The terms "system" and "network" may be used interchangeably in this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, "at least one of A, B, or C" includes A, B, C, A and B, A and C, B and C, or A, B, and C. In addition, unless otherwise specified, ordinal numbers such as "first" and "second" in embodiments of this application are used for distinguishing between a plurality of objects, instead of limiting an order, a time sequence, a priority, or importance of the plurality of objects.

The following describes the technical solutions in embodiments of this application with reference to the accompanying drawings in embodiments of this application. All other embodiments obtained by a person of ordinary skill in the art based on embodiments of this application without creative efforts shall fall within the protection scope of this application.

In recent years, with rapid popularization of smartphones, the mobile Internet expands at an unprecedented speed, various services in the human society are gradually transferred from an offline mode to an online mode, and the mobile Internet has borne huge social and economic value, and becomes indispensable infrastructure in the human society.

As service value borne by the mobile Internet increases continuously, the operator network, as the infrastructure of the mobile Internet, becomes increasingly complex. To simplify network management and improve network and service deployment agility, for example, the 5G network uses the network function virtualization (network function virtualization, NFV) technology, so that an operator can quickly deploy a virtualized 5G core network on infrastructure of a common cloud platform. To further reduce network operation costs, the virtualized core network and an infrastructure platform (NFV infrastructure, NFVI) are separated and belong to different interest entities, which gradually becomes a network evolution trend. Operators are responsible for operating virtualized networks, while professional cloud vendors are responsible for providing basic network services. Compared with the conventional cloud-network convergence mode, the cloud-network separation mode brings an additional challenge, that is, how an operator can trust system hardware and platform provided by a cloud service provider on which a virtualized core network depends.

To address the challenge, the 3rd generation partnership project (3rd generation partnership project, 3GPP) introduces the root of trust (root of trust, RoT)-based remote attestation (remote attestation, RA) technology, to assure operators that hardware and software used by the NFVI and a virtual network element running on the NFVI meet operators' requirements and expectations, so that operators and users can trust networks.

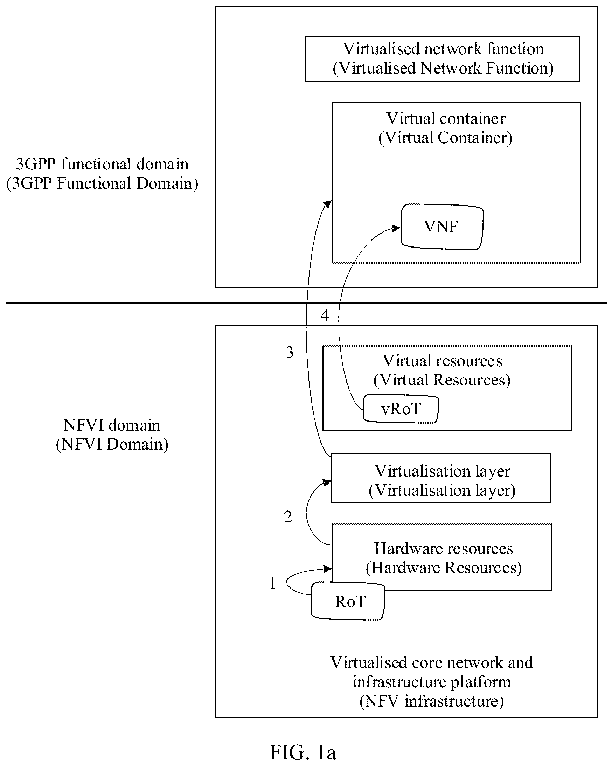

In an implementation example, FIG. 1a is a diagram of trustworthiness measurement, and specifically relates to an organization mode of a trusted virtualized network based on a cloud-network separation mode. In FIG. 1a, an NFVI belongs to a trusted network infrastructure, usually uses a common hardware and software platform, and may be provided by a cloud vendor. The NFVI can use a root of trust to provide system trustworthiness configuration information of the platform for the outside. In addition, to ensure trustworthiness of a virtual network element, the NFVI is further responsible for running and managing a virtual root of trust (Virtual RoT, vRoT). The vRoT is responsible for managing and providing trustworthiness configuration information of the virtual network element.

The trustworthiness measurement in FIG. 1a includes:
1. The RoT measures hardware resources (Hardware Resources). For example, the hardware resources may include a BIOS.
2. The hardware resources measure a virtualization layer (Virtualisation layer) (bootloader), for example, the virtualization layer may include a hypervisor/container engine (hypervisor/container engine).
3. The virtualization layer measures a virtual container (Virtual Container), for example, the virtual container may include a virtual machine/operating system container (VM/OS Container).
4. The virtual root of trust (vRoT) located in virtual resources (Virtual Resources) measures a virtualized network function (virtualized network function, VNF).

In this way, evidence of remote attestation is generated through the trustworthiness measurement shown in FIG. 1a. A remote attestation client obtains a remote attestation report from the RoT or the vRoT, and sends the remote attestation report to a remote server, to prove trustworthiness of the NFV platform or the VNF.

In addition, a commonly used root of trust technology is the TPM technology. A TPM is a microcontroller capable of storing keys, passwords, and digital certificates, and can be embedded in computing devices that need the TPM function. A TPM chip can defend against external software attacks and physical theft to ensure information storage security. A functional module structure of the TPM chip may include a computing unit, a storage unit, a password computing module, and an independent hardware clock. The TPM is mainly configured to record integrity verification values of software and hardware modules during device startup.

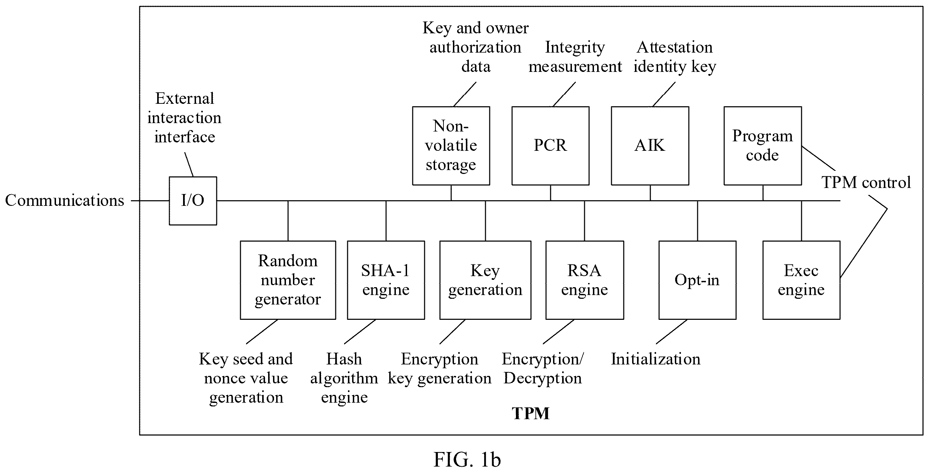

In an implementation example, as shown in FIG. 1b, the modules involved in trustworthiness measurement of the TPM include an external interaction interface (I/O) for communications (Communications), a random number generator (Random Number Generator) that generates a key seed and a nonce value, a hash algorithm engine (an SHA-1 Engine), encryption key generation (Key Generation), encryption/decryption (an RSA Engine), initialization (Opt-in), TPM control (an Exec Engine/Program Code), an attestation identity key (Attestation Identity Key, AIK), integrity measurement (Platform Configuration Register, PCR), and key and owner authorization data (Non-Volatile Storage).

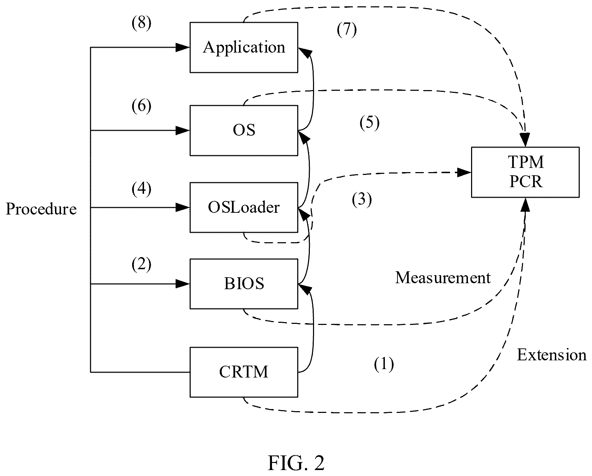

In an implementation example, processes (1), (2), (3), (4), (5), (6), (7), and (8) in FIG. 2 show that the TPM chip obtains measurement values of software and hardware components in phases during device startup, including a CRTM, a BIOS, and an OS. The measurement values are recorded in a PCR of a TPM. The TPM and the CRTM together form a trusted computing base of a platform. The CRTM is a trust anchor and a segment of code, and is usually stored in a read-only memory (read only memory, ROM) of a hardware platform. After a processor (for example, a CPU) is powered on, CRTM code is loaded from the ROM and executed. The CRTM measures itself, and the measurement value of the CRTM is stored in the TPM. Then, the CRTM executes other parts of system startup. After startup is completed, the TPM may provide a device startup report (a remote attestation report) to a remote server through an interface. The report includes a platform configuration information digest stored in the PCR, and integrity of the digest is signed by using an AIK certificate private key stored in the TPM.

In a network virtualization scenario, remote attestation is an important means for a computing platform to obtain trust of operators. The remote attestation technology is a technology for verifying system configuration trust of an attested object through remote means such as a network without contacting the attested object. When the computing platform uses the TPM, the platform may obtain system configuration information from the TPM via a remote attestation client. The client then sends remote attestation information signed by the TPM to a remote relying party.

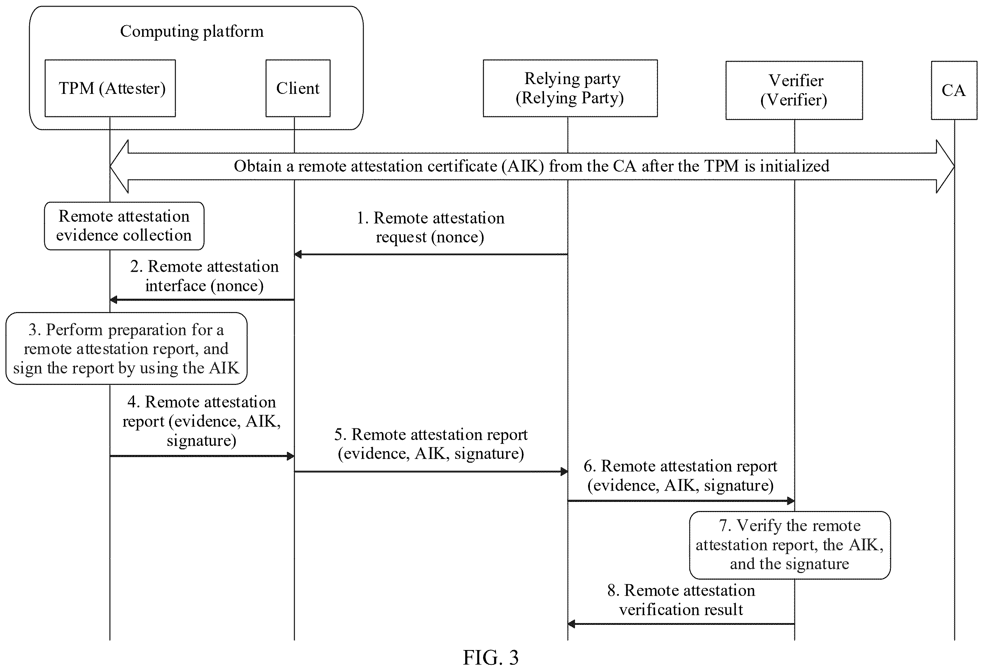

In an implementation example, FIG. 3 shows a typical TPM-based remote attestation process, which includes the following steps.

Initialization step: After a TPM (that is, an attester (Attester)) on a computing platform is initialized, the TPM obtains a remote attestation certificate (that is, a digital certificate, which is used to generate an AIK) from a CA server.

Step 1: A relying party (Relying Party) (or a relying entity) sends a remote attestation request (which may carry nonce) to a client on the computing platform.

Step 2: The client on the computing platform forwards the request to a remote attestation interface of the TPM on the computing platform.

Step 3: The TPM on the computing platform performs preparation for a remote attestation report by collecting remote attestation evidence, and signs the report by using the AIK.

Step 4: The TPM in the computing platform sends the remote attestation report (which may carry the remote attestation evidence, the AIK, and a signature) to the client on the computing platform.

It should be understood that the remote attestation evidence is information (for example, a measurement log and/or a PCR value) measured by the TPM on the computing platform, the signature is used to verify the remote attestation evidence, and in this example, the remote attestation evidence is integrated with the signature and then encapsulated into (or carried in) the remote attestation report.

Optionally, the remote attestation evidence and the signature may be separately encapsulated, that is, the remote attestation evidence is encapsulated in (or carried in) the remote attestation report, and the signature is encapsulated in another manner and then sent.

Step 5: The client on the computing platform forwards the remote attestation report to the relying party.

Step 6: The relying party forwards the remote attestation report to a verifier (Verifier).

Step 7: The verifier verifies the remote attestation report, the AIK, and the signature, and obtains a remote attestation verification result.

Step 8: The verifier sends the remote attestation verification result to the relying party.

It can be learned from the implementation steps shown in FIG. 3 that, after being initialized, the TPM on the computing platform first obtains, from the CA, an AIK certificate for remote attestation. After the computing platform is started, the TPM collects software and hardware configuration information during system startup and running and stores the information in a corresponding PCR. When the relying party needs to obtain remote attestation data of the platform, the relying party sends a message to the remote attestation client on the platform to obtain the data.

It can be learned from the implementation process that, before a computer device (for example, the computing platform shown in FIG. 3) sends a remote attestation report, the computer device may obtain a digital certificate from the certificate authority (certificate authority, CA) server. Subsequently, the computer device may sign a remote attestation report based on the digital certificate to obtain signature information, and carry the signature information in a process of sending the remote attestation report, so that a receiver of the remote attestation report can verify the remote attestation report based on the signature information. In addition, the root of trust of the TPM is mainly designed for a conventional PC, without considering an operator network. Therefore, directly applying the TPM to the operator network brings some extra management burdens. For example, the operator needs to deploy a certificate server or use an external third-party certificate server to issue a certificate AIK for remote attestation to the TPM.

However, the interaction process of the remote attestation report highly depends on the CA server. If a CA server is unreliable (for example, suffers from an external attack or has a vulnerability in a certificate issuing process), a digital certificate provided by the CA server becomes unreliable, reducing reliability of a verification process implemented based on the digital certificate.

To resolve this problem, this application provides a remote attestation method and a related device, to verify a remote attestation report by using a symmetric key of a SIM, without depending on a digital certificate provided by a CA server. This can improve reliability of a remote attestation report verification process. In addition, this fully uses a mechanism of performing identity management of the SIM by a network, and a mechanism of performing verification by using a CA certificate in remote attestation is simplified, thereby simplifying network management and improving network management efficiency.

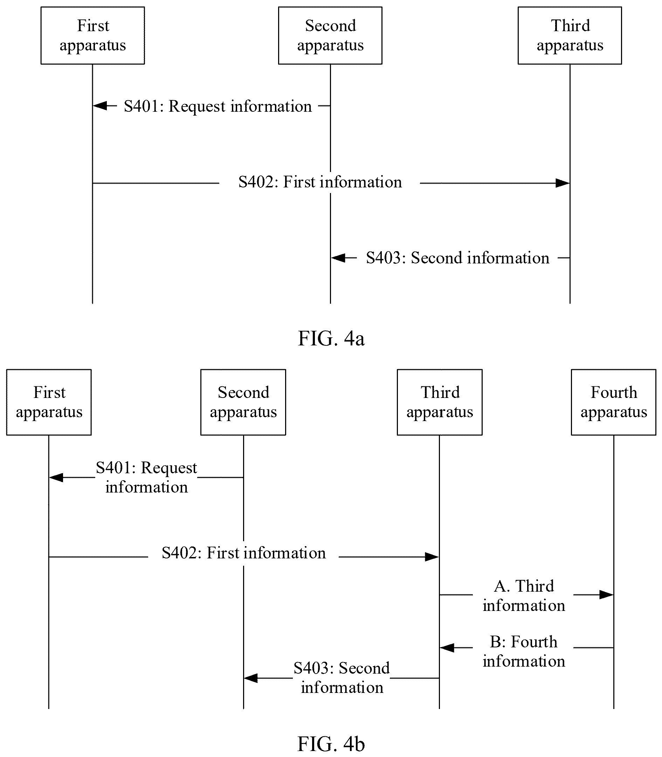

FIG. 4a is a diagram of a remote attestation method according to this application. The method includes the following steps.

It should be noted that, in FIG. 4a and other subsequent accompanying drawings, the method is illustrated by using an example in which at least two apparatuses in a first apparatus, a second apparatus, a third apparatus, and a fourth apparatus execute such schematic interaction. However, an execution body of such schematic interaction is not limited in this application. For example, one of the at least two apparatuses may be a terminal device, or the execution body may be a chip, a chip system, or a processor that supports the terminal device in implementing the method, or may be a logical module or software that can implement all or a part of functions of the terminal device. For another example, one of the at least two apparatuses may be a network device, or may be a chip, a chip system, or a processor that supports the network device in implementing the method, or may be a logical module or software that can implement all or a part of functions of the network device.

S401: The second apparatus sends request information, and correspondingly, the first apparatus receives the request information. The request information is for requesting a remote attestation report, and the remote attestation report is for remote attestation of the first apparatus.

It should be noted that the first apparatus may be a device or an entity that generates/provides the remote attestation report. For example, the first apparatus may be a terminal device or a network device in a communication network, or the first apparatus may include a device or an entity such as a server, an NFV platform, a virtual machine, or a container.

In addition, the second apparatus may be a device or an entity that requests the remote attestation report. For example, the second apparatus may be a device or an entity that serves as a relying entity (Relying Party), for example, a server, a virtual machine, or a container. For example, when the method shown in FIG. 4b is applied to a communication network (for example, a 5G network or a 6G network), the second apparatus may be an authentication service function (authentication service function, AUSF) network element, an access and mobility management function (access and mobility management function, AMF) network element, or the like. With development of communication technologies, the second apparatus may also have another name. This is not limited herein.

S402: The first apparatus sends first information, and correspondingly, the third apparatus receives the first information. The first information includes the remote attestation report and verification information, the verification information is for verifying the remote attestation report, and the verification information is obtained by processing the remote attestation report based on a symmetric key of a subscriber identity module (subscriber identity module, SIM) in the first apparatus.

It should be noted that the third apparatus may be a device or an entity that verifies the remote attestation report. For example, the third apparatus may be a device or an entity that serves as a verifier (Verifier), for example, a server, a virtual machine, or a container.

Optionally, after the first apparatus receives, in step S401, the request information for requesting the remote attestation report, the first apparatus may perform measurement based on a root of trust (RoT) or a virtual root of trust (RoT) to obtain the remote attestation report, and send the first information including the remote attestation report in step S402. In other words, the remote attestation report in the first information may include information (for example, a measurement log and/or a PCR value) obtained through measurement. The remote attestation report may also be referred to as remote attestation evidence, remote evidence, a trusted report, or another name, which is not limited herein. In addition, in the first information, the remote attestation report and the verification information may be separately encapsulated (or carried) in the first information, or the remote attestation report and the verification information may be integrated and then encapsulated (or carried) in the first information. This is not limited herein.

Optionally, in step S402, the first apparatus may directly send the first information to the third apparatus over a communication link between the first apparatus and the third apparatus. Alternatively, in step S402, the first apparatus may send the first information to the third apparatus through forwarding by the second apparatus, so that the second apparatus, as a requester (or referred to as a relying party, a relying entity, or the like) of the remote attestation report, can perform forwarding of the first information including the remote attestation report.

In this application, the SIM is a module configured to store/configure identity information and the symmetric key. During actual application, the module may alternatively be implemented by using another name, for example, an identification module, an identity identification module, or a key module. This is not limited herein.

Optionally, the SIM may be further configured to store/configure other information of the first apparatus, for example, the other information may include one or more of the identity information, a mobile country code (mobile country code, MCC), a mobile network code (mobile network code, MNC), a private user identity (private user identity), a public user identity (public user identity), and a short message parameter.

Optionally, the SIM may be implemented by using hardware, or may be implemented by using software. This is not limited herein.

For example, when the SIM is implemented by using hardware, the SIM may include a universal subscriber identity module (universal subscriber identity module, USIM), an internet protocol media service identity module (internet protocol media service identity module, ISIM), or an embedded subscriber identity module (embedded SIM, eSIM).

For another example, when the SIM is implemented by using software, the SIM may include a soft subscriber identity module (softSIM) or a virtual subscriber identity module (virtual SIM, VSIM).

It should be understood that the first apparatus may include one or more SIMs implemented by using hardware, and/or the first apparatus may include one or more SIMs implemented by using software.

Optionally, the verification information for verifying the remote attestation report may alternatively be implemented by using another name, for example, a message authentication code (message authentication code, MAC) or an authentication code.

In a possible implementation, the request information sent by the second apparatus in step S401 includes a random number (nonce); and correspondingly, in step S402, that the verification information in the first information sent by the first apparatus is obtained by processing the remote attestation report based on the symmetric key of the SIM in the first apparatus includes: The verification information is obtained by processing the remote attestation report based on a first key generated based on the symmetric key of the SIM in the first apparatus and the random number. In this way, the verification information in the first information is obtained based on the symmetric key of the SIM in the first apparatus and the random number carried in the request information, to ensure timeliness of the verification information, and further improve the reliability of the remote attestation report verification process.

In a possible implementation, in step S402, the first information sent by the first apparatus further includes the random number. Specifically, the first information that includes the remote attestation report and the verification information may further include the random number, so that the receiver of the first information can verify the remote attestation report in the first information based on the random number and other information (for example, the symmetric key of the SIM).

In a possible implementation, the remote attestation report is obtained through processing by a first module in the first apparatus. The first information further includes a first identifier, and the first identifier identifies the SIM and/or the first module. Specifically, the remote attestation report in the first information may be obtained through processing by the first module in the first apparatus. The first information may further include the first identifier that identifies the SIM and/or the first module, so that the receiver of the first information can perform verification based on the first identifier by using corresponding information.

For example, the first identifier may include an international mobile subscriber identity (international mobile subscriber identity, IMSI), a generic public subscription identifier (generic public subscription identifier, GPSI), a subscriber user permanent identifier (subscriber user permanent identifier, SUPI), or a mobile subscriber integrated services digital network number (mobile subscriber integrated services digital network number, MSISDN).

In a possible implementation, the first module is a trusted platform module (trusted platform module, TPM); or the first module is a trusted platform control module (trusted platform control module, TPCM); or the first module is a functional module in a TPM; or the first module is a functional module in a TPCM. Specifically, the remote attestation report in the first information may be obtained through processing by the first module in the first apparatus. The first module may be implemented in the foregoing multiple manners, to provide multiple flexible implementations.

Optionally, the first module is integrated into the SIM, or the SIM is integrated into the first module, or both the first module and the SIM are independently disposed modules. For example, when the first module is integrated into the SIM or the SIM is integrated into the first module, the SIM and the first module that are integrated may be referred to as a subscriber identity module trusted platform module (subscriber identity module trusted platform module, SIMTPM), or a virtual subscriber identity module trusted platform module (virtual subscriber identity module trusted platform module, vSIMTPM), or another name.

It may be understood that the vSimTPM is a software implementation of the simTPM. For example, the vSimTPM may be used for remote attestation of a virtual machine or a container on a server platform. For example, the SIMTPM may include a TPM (or TPCM) module and a SIM (or USIM/eSIM) module. The TPM (or TPCM) module mainly provides system configuration evidence required by the remote attestation of a system platform, and the TPM (or TPCM) module packs the system configuration evidence into a remote attestation report, and signs the remote attestation evidence by using a symmetric key included in the SIM (or USIM/eSIM) module, and sends the remote attestation evidence to a client in the first apparatus. Subsequently, the client sends the remote attestation evidence to the relying party (for example, the second apparatus) and the verifier (for example, the third apparatus) for remote attestation. The vSimTPM implements functions of the simTPM by using software, including the TPM (or TPCM) module implemented by using software, and the SIM (or USIM/eSIM) module implemented by using software.

Optionally, when the first module is a functional module in the TPM or the first module is a functional module in the TPCM, the first module may be understood as a simplified TPM or TPCM. For example, a conventional TPM or TPCM needs to include the modules described in FIG. 1b. In this technical solution, the first module may include a PCR, that is, the first module supports reading and writing of the PCR, and the first module may not include any module other than the PCR. Further, optionally, the first module may include at least one of a remote attestation interface module configured to transmit a remote attestation report, a TPM management module, an AIK certificate module, and an endorsement key (endorsement key, EK) module. In other words, the first module may include functions of the PCR required by the TPM or the TPCM, and the first module may not include a remote verification certificate required by the TPM or the TPCM. In addition, when performing remote attestation, the first module uses the symmetric key of the SIM as a signature key for remote verification.

Optionally, in step S402, in addition to performing verification based on the verification information in the first information, the third apparatus may further perform verification based on the remote attestation report in the first information. For example, the third apparatus may verify the remote attestation report based on a remote attestation baseline, and obtain, based on a verification process of the verification information and a verification process of the remote attestation report, a verification result included in second information. In other words, the verification result may indicate verification results of the two verification processes.

S403: The third apparatus sends the second information, and correspondingly, the second apparatus receives the second information. The second information indicates the verification result of the remote attestation report, and the verification result is obtained by performing verification based on the verification information.

It should be understood that, in step S402, the verification information in the first information sent by the first apparatus is for verifying integrity of the remote attestation report, and/or the verification information in the first information sent by the first apparatus is for verifying validity of the remote attestation report. Correspondingly, in step S403, in the verification result indicated by the second information sent by the third apparatus, the verification result may indicate whether integrity verification of the remote attestation report succeeds, and/or the verification result may indicate whether validity verification of the remote attestation report succeeds.

In a possible implementation, the third apparatus may pre-configure (for example, through factory configuration or manual configuration) information for verification. For example, the information for verification may include a symmetric key of an SIM of one or more apparatuses (including the first apparatus) that may be pre-configured by the third apparatus, so that the third apparatus can verify, in step S403, the verification information in the first information based on the pre-configured information for verification, and obtain the verification result.

In another possible implementation, the third apparatus may further obtain the information for verification in another manner. For example, as shown in FIG. 4b, before the third apparatus sends the second information in step S403, the method further includes the following steps. The third apparatus sends third information based on the first information in step A, and receives fourth information in step B. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key. Specifically, the third apparatus may further obtain, through interaction between the third information and the fourth information, the fourth information that indicates the symmetric key of the SIM or the first key, and subsequently the third apparatus can determine the verification result based on the fourth information, and send the second information that indicates the verification result in step S403.

It may be understood that, after the third apparatus obtains the information (for example, including the symmetric key of the SIM or the first key) for verification in these manners, the third apparatus may process the remote attestation report based on the information for verification to obtain target verification information, and the third apparatus may compare the target verification information with the verification information in the first information. When a comparison result indicates that the target verification information and the verification information are completely consistent (or a difference between the target verification information and the verification information is less than or equal to a threshold), the verification result indicated by the second information sent by the third apparatus is successful. When a comparison result indicates that the target verification information and the verification information are inconsistent (or a difference between the target verification information and the verification information is greater than or equal to a threshold), the verification result indicated by the second information sent by the third apparatus is failed.

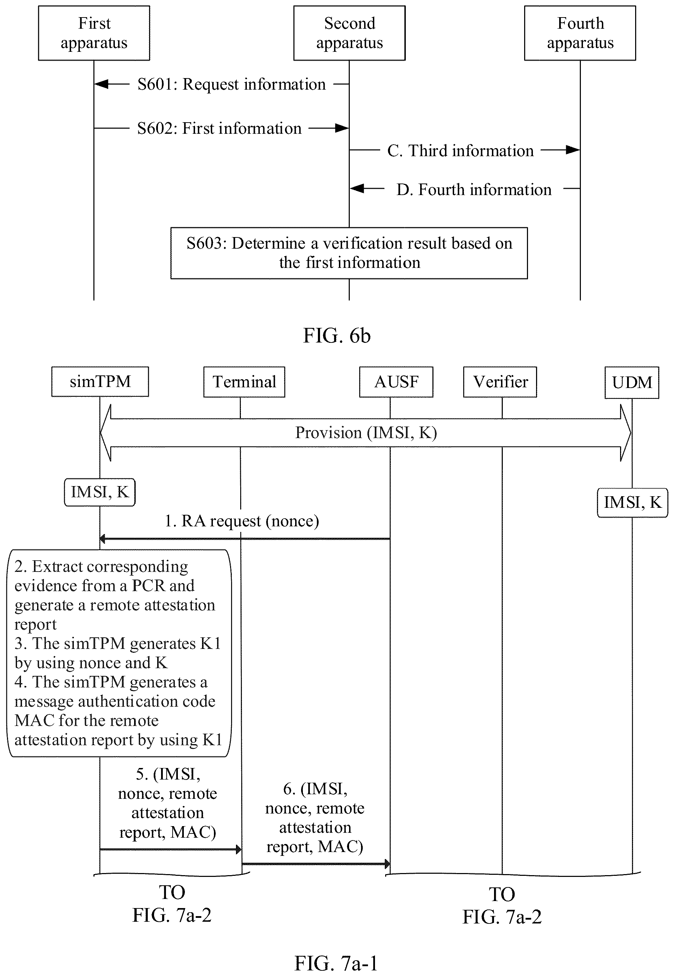

It should be noted that, the fourth apparatus may serve as a device storing a symmetric key of a SIM of one or more apparatuses (including the first apparatus). Any apparatus in the one or more apparatuses may include the simTPM (or the vSimTPM), and the fourth apparatus may also store a verification reference value related to remote verification, for remote verification. For example, when the method shown in FIG. 4b (or a method described below, for example, a method shown in FIG. 6b) is applied to a communication network (for example, a 5G network or a 6G network), the fourth apparatus may be a unified data management (unified data management, UDM) network element. With development of communication technologies, the fourth apparatus may also have another name. This is not limited herein.

It should be understood that implementation processes of step S401, step S402, and step S403 shown in FIG. 4b are the same as implementation processes of step S401, step S402, and step S403 shown in FIG. 4a.

Based on this technical solution, after the first apparatus receives the request information for requesting the remote attestation report in step S401, the first apparatus sends, in step S402 based on the request information, the first information that includes the remote attestation report and the verification information. The verification information is for verifying the remote attestation report, and the verification information is obtained by processing the remote attestation report based on the symmetric key of the SIM in the first apparatus. In other words, the conventional symmetric key of the SIM is mainly used by a mobile device like a mobile phone to perform network access authentication with an operator network. Only after the access authentication succeeds, the mobile device can use the operator network to perform data transmission and use other services provided by the operator. However, in this technical solution, the verification information for verifying the remote attestation report is obtained based on the symmetric key of the SIM in the first apparatus. In this way, the remote attestation report can be verified by using the symmetric key of the SIM, without depending on a digital certificate provided by a CA server. This can improve reliability of a remote attestation report verification process.

In addition, in this technical solution, the first apparatus can verify the remote attestation report by using the symmetric key of the SIM. This fully uses a mechanism of performing identity management of the SIM by a network, and a mechanism of performing verification by using a CA certificate in remote attestation is simplified, thereby simplifying network management and improving network management efficiency.

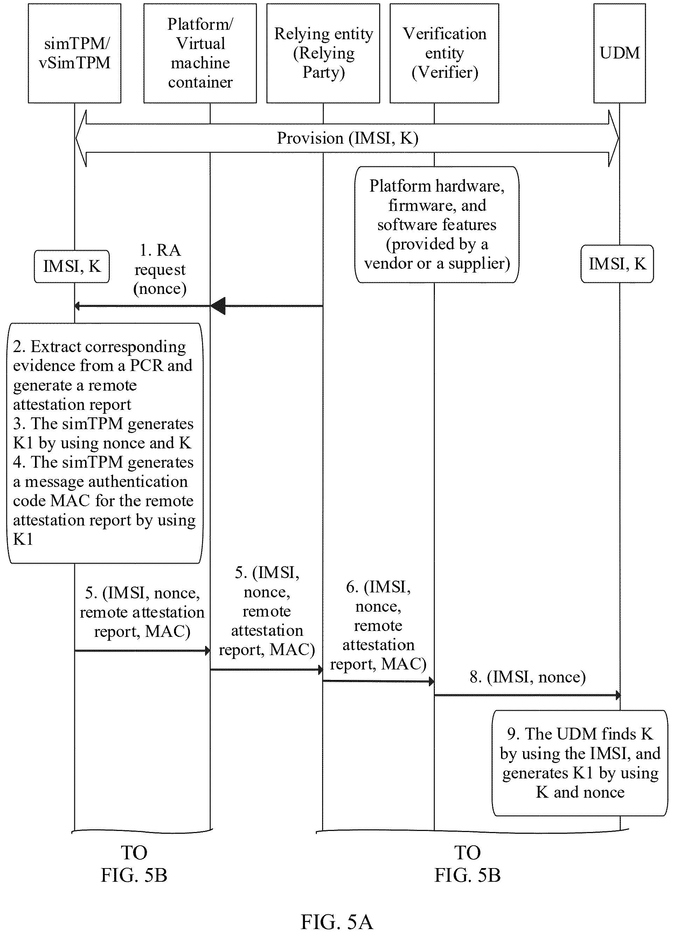

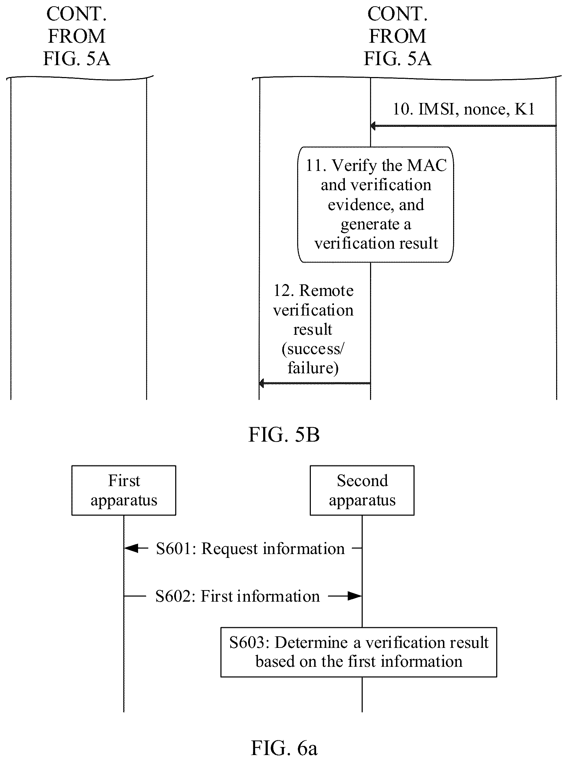

FIG. 5A and FIG. 5B are a diagram of a remote attestation method according to this application. The method is an implementation example of the implementation solution shown in FIG. 4b. The method includes the following steps. It should be understood that, in the example shown in FIG. 5A and FIG. 5B, a simTPM/vSimTPM is an internal module or an external module of a platform/virtual machine container, and a first apparatus may be the simTPM/vSimTPM, or a device including the simTPM/vSimTPM, for example, a device or an entity like a platform/virtual machine container. Correspondingly, in the example shown in FIG. 5A and FIG. 5B, an example in which a second apparatus is a relying entity, a third apparatus is a verification entity, and a fourth apparatus is a UDM is used for description.

Step 1: The simTPM or the vSimTPM receives a remote verification request (that is, the request information in the foregoing embodiment) sent by an external interface (for example, an interface between the simTPM or the vSimTPM and a remote attestation client in the platform/virtual machine container), and the request may carry a random number nonce input externally.

Step 2: The simTPM/vSimTPM obtains corresponding remote attestation evidence from a PCR of the simTPM/vSimTPM to generate a remote attestation report.

Step 3: The simTPM/vSimTPM generates a first key (denoted as K1 in the figure) by using a symmetric key (denoted as K in the figure) of a SIM included in the simTPM/vSimTPM and the received nonce.

Step 4: The simTPM/vSimTPM signs the remote attestation report by using the first key, that is, processes the remote attestation report by using the symmetric key to generate a MAC.

Step 5: The simTPM/vSimTPM sends the report to the client to which the simTPM/vSimTPM belongs, where the report includes an IMSI corresponding to the SIM card in the simTPM/vSimTPM.

Step 6: The client sends the remote attestation report, including the received nonce, IMSI, and MAC, to the relying entity (or referred to as a relying party).

Step 7: The relying entity sends the remote attestation report and related information to the verifier.

Step 8: The verifier sends information like nonce and the IMSI to the UDM.

Step 9: The UDM generates the first key based on the foregoing information.

Step 10: The UDM sends the first key to the verifier.

Step 11: The verifier verifies the received remote attestation information by using the first key, and compares whether the generated MAC is consistent. If the MAC is consistent, comparison and verification are further performed on whether the information in the remote attestation report is consistent with information stored by the verifier, and a verification result is output.

Step 12: The verifier returns the verification result to the relying entity.

Based on the solution shown in FIG. 4b, a solution in which the first apparatus (for example, a terminal device or a network device) performs remote attestation via the simTPM/vSimTPM is provided. The first apparatus may provide remote attestation without obtaining an AIK certificate, and an operator network does not need to additionally manage a CA system to distribute a key. This simplifies the procedure of providing keys by the system by using the capability of managing symmetric keys of SIMs/USIMs by an operator.

In the technical solutions shown in FIG. 4a, FIG. 4b, FIG. 5A, and FIG. 5B, the second apparatus depends on another apparatus (for example, the third apparatus and the possible fourth apparatus) to perform verification based on the verification information. In another implementation provided in this application, the second apparatus serves as the requester of the remote attestation report, and the second apparatus may also perform a related verification process. The following provides an example description with reference to more accompanying drawings.

FIG. 6a is a diagram of a remote attestation method according to this application. The method includes the following steps.

S601: A second apparatus sends request information, and correspondingly, A first apparatus receives the request information.

It should be noted that, for an implementation process of step S601, refer to the implementation process of step S401.

S602: The first apparatus sends first information, and correspondingly, the second apparatus receives the first information.

It should be noted that the second apparatus may be a device or an entity configured to request a remote attestation report, and the second apparatus may also be a device configured to verify the remote attestation report. For example, the second apparatus may be a device or an entity like a server, a virtual machine, or a container.

In step S602, for an implementation process of the first information, refer to the related implementation of step S402.

S603: The second apparatus determines a verification result based on the first information.

It should be understood that, in step S602, the verification information in the first information sent by the first apparatus is for verifying integrity of the remote attestation report, and/or the verification information in the first information sent by the first apparatus is for verifying validity of the remote attestation report. Correspondingly, in step S603, in the verification result determined by the second apparatus, the verification result may indicate whether integrity verification of the remote attestation report succeeds, and/or the verification result may indicate whether validity verification of the remote attestation report succeeds.

In a possible implementation, the second apparatus may pre-configure (for example, through factory configuration or manual configuration) information for verification. For example, the information for verification may include a symmetric key of an SIM of one or more apparatuses (including the first apparatus) that may be pre-configured by the second apparatus, so that the second apparatus can verify, in step S603, the verification information in the first information based on the pre-configured information for verification, and obtain the verification result.

In another possible implementation, the second apparatus may further obtain the information for verification in another manner. For example, as shown in FIG. 6b, before the second apparatus sends second information in step S603, the method further includes the following steps. The second apparatus sends third information based on the first information in step C, and receives fourth information in step D. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key. Correspondingly, in step S603 shown in FIG. 6b, that the second apparatus verifies the verification information to obtain the verification result of the remote attestation report includes: The second apparatus verifies the verification information based on the fourth information to obtain the verification result of the remote attestation report. In this way, the second apparatus may further obtain, through interaction of the third information and the fourth information, the fourth information that indicates the symmetric key of the SIM or the first key, and subsequently, may determine the verification result based on the fourth information.

It may be understood that, after the second apparatus obtains the information (for example, including the symmetric key of the SIM or the first key) for verification in these manners, the second apparatus may process the remote attestation report based on the information for verification to obtain target verification information, and the second apparatus may compare the target verification information with the verification information in the first information. When a comparison result indicates that the target verification information and the verification information are completely consistent (or a difference between the target verification information and the verification information is less than or equal to a threshold), the verification result determined by the second apparatus is successful. When a comparison result indicates that the target verification information and the verification information are inconsistent (or a difference between the target verification information and the verification information is greater than or equal to a threshold), the verification result determined by the second apparatus is failed.

It should be understood that implementation processes of step S601 and step S602 shown in FIG. 6b is the same as the implementation processes of step S601 and step S602 shown in FIG. 6a.

Optionally, in step S603 shown in FIG. 6a or FIG. 6b, in addition to performing verification based on the verification information in the first information, the second apparatus may further perform verification based on the remote attestation report in the first information. For example, the second apparatus may verify the remote attestation report based on a remote attestation baseline, and obtain, based on a verification process of the verification information and a verification process of the remote attestation report, a verification result included in second information. In other words, the verification result may indicate verification results of the two verification processes.

Optionally, in step S603 shown in FIG. 6a or FIG. 6b, in addition to performing verification based on the verification information in the first information, the second apparatus may further perform verification based on the remote attestation report in the first information. For example, the second apparatus sends the remote attestation report to another apparatus (for example, a third apparatus, where the third apparatus may be a device that verifies the remote attestation report, for example, the third apparatus may be a server, a virtual machine, or a container that serves as a verifier (Verifier)), so that the another apparatus may verify the remote attestation report based on a remote attestation baseline, and send a verification result of the remote attestation report to the second apparatus based on a verification process of the remote attestation report. Subsequently, the second apparatus may obtain the verification result in step S603 based on a verification result obtained by locally verifying the verification information and the verification result of the remote attestation report. In other words, the verification result in step S603 may indicate verification results of the two verification processes.

It may be understood that the remote attestation baseline may be implemented in a plurality of manners. For example, the remote attestation baseline may include a group of values or a value range. When the value of the remote attestation report is within the group of values or the value range, it may be determined that the verification result of verifying the remote attestation report based on the remote attestation baseline is successful. When the value of the remote attestation report is beyond the group of values or the value range, it may be determined that the verification result of verifying the remote attestation report based on the remote attestation baseline is failed.

Based on this technical solution, after the second apparatus sends, in step S601, the request information for requesting the remote attestation report, and after the second apparatus receives, in step S602, the first information including the remote attestation report and the verification information, the second apparatus can verify the verification information in step S603 to obtain the verification result of the remote attestation report. The verification result is obtained by performing verification based on the verification information, and the verification information is obtained by processing the remote attestation report based on the symmetric key of the SIM in the first apparatus. In other words, the verification information for verifying the remote attestation report is obtained based on the symmetric key of the SIM in the first apparatus. In this way, in this technical solution, the remote attestation report can be verified by using the symmetric key of the SIM, without depending on a digital certificate provided by a CA server. This can improve reliability of a remote attestation report verification process. In addition, in this technical solution, the remote attestation report can be verified by using the symmetric key of the SIM. This fully uses a mechanism of performing identity management of the SIM by a network, and a mechanism of performing verification by using a CA certificate in remote attestation is simplified, thereby simplifying network management and improving network management efficiency.

FIG. 7a-1 and FIG. 7a-2 are a diagram of a remote attestation method according to this application. The method is an implementation example of the implementation solution shown in FIG. 6b. The method includes the following steps. It should be understood that, in the example shown in FIG. 7a-1 and FIG. 7a-2, a simTPM/vSimTPM is an internal module or an external module of a terminal, and a first apparatus may be the simTPM/vSimTPM, or a device including the simTPM/vSimTPM, for example, a device or an entity like a terminal device. Correspondingly, in the example shown in FIG. 7a-1 and FIG. 7a-2, an example in which a second apparatus is an authentication service function (authentication service function, AUSF) (an example of a relying entity), a third apparatus is a verifier (or referred to as a verification entity), and a fourth apparatus is a UDM is used for description.

Step 1: The AUSF sends a remote attestation request (that is, the request information in the foregoing embodiment) to the terminal (for example, a remote attestation client in the terminal), where the request includes a random number nonce, and the terminal sends the random number to the simTPM/vSimTPM by calling an interface.

Step 2: After receiving the request, the simTPM/vSimTPM on the terminal first generates a remote attestation report by using remote attestation evidence stored in the simTPM/vSimTPM.

Step 3: The simTPM/vSimTPM generates a first key (denoted as K1 in the figure) by using nonce and a symmetric key (denoted as K in the figure) of a SIM stored in a SIM/USIM profile (profile) and the received nonce.

Step 4: The simTPM/vSimTPM generates a MAC for the remote attestation report by using K1.

Step 5: The simTPM/vSimTPM returns the remote attestation report including the MAC to the terminal.

Step 6: The terminal sends the remote attestation report, the MAC, the IMSI, and nonce to the AUSF.

Step 7: After receiving the message, the AUSF extracts the IMSI and nonce from the message, and sends the IMSI and nonce to the UDM.

Step 8: The UDM obtains the corresponding K by using the IMSI and generates K1 by using nonce.

Step 9: The UDM returns the generated K1, nonce, and IMSI to the AUSF.

Step 10: The AUSF verifies, by using the received K1, the MAC in the remote attestation message received from the terminal (that is, the verification process performed based on the verification information).

Step 11: After the MAC verification succeeds, the AUSF extracts the remote attestation report from the message received in step 6, and sends the remote attestation report to the verifier node.

Step 12: The verifier compares the received remote verification report with the remote verification baseline stored in the verifier, and generates a verification result (that is, the verification process performed based on the remote attestation report).

Step 13: The verifier returns the remote attestation result to the AUSF.

FIG. 7b-1 and FIG. 7b-2 are a diagram of a remote attestation method according to this application. The method is an implementation example of the implementation solution shown in FIG. 6b. The method includes the following steps. It should be understood that, in the example shown in FIG. 7b-1 and FIG. 7b-2, a simTPM/vSimTPM is an internal module or an external module of a base station, and a first apparatus may be the simTPM/vSimTPM, or a device including the simTPM/vSimTPM, for example, a device or an entity like a base station. Correspondingly, in the example shown in FIG. 7b-1 and FIG. 7b-2, an example in which a second apparatus is a device management node (an example of a relying entity), a third apparatus is a verifier (or referred to as a verification entity), and a fourth apparatus is a UDM is used for description.

Step 1: The device management node sends a remote attestation request (that is, the request information in the foregoing embodiment) to the base station (for example, a remote attestation client in the base station), where the request includes a random number nonce, and the base station sends the random number to the simTPM/vSimTPM by calling an interface.

Step 2: After receiving the request, the simTPM/vSimTPM on the base station first generates a remote attestation report by using remote attestation evidence stored in the simTPM/vSimTPM.

Step 3: The simTPM/vSimTPM generates a first key (denoted as K1 in the figure) by using nonce and a symmetric key (denoted as K in the figure) of a SIM stored in a SIM/USIM profile (profile) and the received nonce.

Step 4: The simTPM/vSimTPM generates a MAC for the remote attestation report by using K1.

Step 5: The simTPM/vSimTPM returns the remote attestation report including the MAC to the base station.

Step 6: The base station sends the remote attestation report, MAC, IMSI, and nonce to the device management node.

Step 7: After receiving the message, the device management node extracts the IMSI and nonce from the message, and sends the IMSI and nonce to the UDM.

Step 8: The UDM obtains the corresponding K by using the IMSI and generates K1 by using nonce.

Step 9: The UDM returns the generated K1, nonce, and IMSI to the device management node.

Step 10: The device management node verifies, by using the received K1, the MAC in the remote attestation message received from the base station (that is, the verification process performed based on verification information).

Step 11: After the MAC verification succeeds, the device management node extracts the remote attestation report from the message received in step 6, and sends the remote attestation report to the verifier node.

Step 12: The verifier compares the received remote verification report with the remote verification baseline stored in the verifier, and generates a verification result (that is, the verification process performed based on the remote attestation report).

Step 13: The verifier returns the remote attestation result to the device management node.

It should be understood that the implementation example shown in FIG. 7b-1 and FIG. 7b-2 mainly resolves a solution in which a base station performs remote attestation when using simTPM/vSimTPM. The steps are similar to those in the implementation example shown in FIG. 7a-1 and FIG. 7a-2, and a difference lies in a node role. The terminal node in FIG. 7a-1 and FIG. 7a-2 is replaced with the base station in FIG. 7b-1 and FIG. 7b-2, and the AUSF in FIG. 7a-1 and FIG. 7a-2 is replaced with the device management node in FIG. 7b-1 and FIG. 7b-2.

It can be learned from the implementation examples that the SIM technology and the TPM technology are extended, and the symmetric key of the SIM in the simTPM is used to perform remote attestation. In addition, the application scope of the simTPM is extended to network-side devices, including the base station and core network server platform.

In some implementations, a software-based vSimTPM is proposed as a root of trust of a virtual network element to replace the vTPM.

In some implementations, the symmetric key of the SIM in the simTPM/vSimTPM is used as a remote attestation key (or a basis for determining the remote attestation key), and is used with a symmetric key stored in a network-side network element (such as the UDM) to provide remote attestation for a network of a mobile operator.

In some implementations, the concept of the simTPM may be further extended to a virtual machine layer, to form a root of trust system with the simTPM as a core.

In some implementations, entities in an operator network, including a mobile terminal, a base station, an NFV platform, a virtual machine, a container, and the like, provide remote attestation by using a TPM module or function embedded in a SIM/softSIM, where the TPM module or function collects a remote attestation material (for obtaining the remote attestation report).

In some implementations, the TPM module or function uses the IMSI and symmetric key embedded in the SIM/softSIM to provide the verification information (for example, the message authentication code MAC) for the remote attestation material.

In some implementations, a UDM user database interface provides a verification key (for example, the symmetric key of the SIM or the first key) for the remote verification entity based on the received request, including the IMSI and a necessary key generation parameter.

In some implementations, the remote verification entity verifies integrity of the remote attestation evidence based on the key provided by the UDM interface, and further verifies the evidence.

In some implementations, the simTPM may also be implemented by using software, to provide remote verification for upper-layer software.

FIG. 8 is an implementation example of a procedure of a remote attestation method according to this application, including the following steps.

Step 1: A simTPM/vSimTPM receives an external call request and generates a remote attestation report by using PCR data stored in a TPM functional module. It should be understood that step 1 shown in FIG. 8 may be an implementation example of the foregoing interaction of the request information.

Step 2: The simTPM/vSimTPM generates a remote attestation key by using nonce in the call request and a symmetric key in a SIM/USIM, and generates a MAC for the remote attestation report by using the key.

Step 3: A device (which may include a physical device or a virtual device) to which the simTPM/vSimTPM belongs sends the remote attestation report to a relying party and a verifier on a network side. It should be understood that step 3 shown in FIG. 8 may be an implementation example of the foregoing interaction of the first information.

Step 4: The relying party and verifier obtain the remote attestation key from the UDM through steps 5 to 7 by using the IMSI and nonce in the message. It should be understood that steps 5 to 7 shown in FIG. 8 may be an implementation example of the interaction between the third information and the fourth information.

Then, the relying party or the verifier verifies the MAC of the remote attestation report by using the key, and finally completes remote attestation, and may output a verification result.

FIG. 9 is an implementation example of an implementation architecture of a remote attestation method according to this application. As shown in FIG. 9, the first apparatus may include at least one of a vSimTPM 1, a vSimTPM 2, and a cryptographic library (Crypto Lib) in a hardware system in a virtual machine monitor (virtual machine monitor, VMM) program in FIG. 9.

Optionally, the vSimTPM 1 is used for a virtual machine (virtual machine, VM) 1 having a function of a VNF 1, the vSimTPM 2 is used for a VM 2 having a function of the VNF 1, and the vSimTPM 1 and the vSimTPM 2 may be referred to as virtual roots of trust. The vSimTPM is a software implementation of the simTPM, and is mainly used for remote attestation of a virtual machine or a container on a server platform.

Optionally, the Crypto Lib in the hardware system may include a TPM (and/or TPCM) and a SIM based on an open root of trust design. In addition, the Crypto Lib in the hardware system may further include universal integrated circuit card (universal integrated circuit card, UICC) hardware, an OS, an interface, and the like.

In addition, the TPM, the TPCM, the vSimTPM 1, or the vSimTPM 2 shown in FIG. 9 may be a whole TPM (or TPCM), or may be a simplified TPM (or TPCM), that is, may include functions of a PCR required by the TPM, and may support reading and writing of the PCR. Optionally, the TPM, the TPCM, the vSimTPM 1, or the vSimTPM 2 shown in FIG. 9 may include a remote attestation interface module configured to transmit a remote attestation report, a TPM management module, an AIK certificate module, and an endorsement key (endorsement key, EK) module. In other words, during remote attestation, a symmetric key of the SIM may be used as a signature key for remote verification.

The foregoing describes this application from perspectives of a method and a system. The following describes an apparatus according to this application based on more accompanying drawings.

Refer to FIG. 10. An embodiment of this application provides an apparatus 1000. The apparatus 1000 includes a transceiver unit 1001 and a processing unit 1002.

It should be understood that the apparatus 1000 may implement a function of any device (for example, the first apparatus, second apparatus, the third apparatus, or the fourth apparatus) in the foregoing method embodiments, and therefore can also implement beneficial effect of the foregoing method embodiments. In this embodiment of this application, the apparatus 1000 may be any device in the foregoing method embodiments, or may be an integrated circuit, an element, or the like in any device in the foregoing method embodiments, for example, a chip.

In a possible implementation, when the apparatus 1000 is configured to perform the method performed by the first apparatus in any one of the foregoing embodiments, the transceiver unit 1001 is configured to receive request information, where the request information is for requesting a remote attestation report, and the remote attestation report is for remote attestation of the first apparatus. The processing unit 1002 is configured to determine first information based on the request information. The transceiver unit 1001 is further configured to send the first information. The first information includes the remote attestation report and verification information, the verification information is for verifying the remote attestation report, and the verification information is obtained by processing the remote attestation report based on a symmetric key of a subscriber identity module SIM in the first apparatus.

In a possible implementation, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation, the first information further includes the random number.

In a possible implementation, the remote attestation report is obtained through processing by a first module in the first apparatus. The first information further includes a first identifier, and the first identifier identifies the SIM and/or the first module.

In a possible implementation, the first module is a trusted platform module TPM; or the first module is a trusted platform control module TPCM; or the first module is a functional module in a TPM; or the first module is a functional module in a TPCM.

In a possible implementation, the SIM includes a universal subscriber identity module USIM, an internet protocol media service identity module ISIM, an embedded subscriber identity module eSIM, or a soft subscriber identity module softSIM.

In a possible implementation, the verification information is for verifying integrity of the remote attestation report, and/or the verification information is for verifying validity of the remote attestation report.

In a possible implementation, when the apparatus 1000 is configured to perform the method performed by the second apparatus in any one of the foregoing embodiments, the processing unit 1002 is configured to determine request information. The transceiver unit 1001 is configured to send the request information. The request information is for requesting a remote attestation report, and the remote attestation report is for remote attestation of the first apparatus. The transceiver unit 1001 is further configured to receive second information, where the second information indicates a verification result of the remote attestation report, the verification result is obtained by performing verification based on verification information, and the verification information is obtained by processing the remote attestation report based on a symmetric key of a SIM in the first apparatus.

In a possible implementation, the transceiver unit 1001 is further configured to receive first information, where the first information includes the remote attestation report and the verification information. The transceiver unit 1001 is further configured to send the first information.

In a possible implementation, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation, the first information further includes the random number.

In a possible implementation, the remote attestation report is obtained through processing by a first module in the first apparatus. The first information further includes a first identifier, and the first identifier identifies the SIM and/or the first module.

In a possible implementation, the first module is a trusted platform module TPM; or the first module is a trusted platform control module TPCM; or the first module is a functional module in a TPM; or the first module is a functional module in a TPCM.

In a possible implementation, the SIM includes a universal subscriber identity module USIM, an internet protocol media service identity module ISIM, an embedded subscriber identity module eSIM, or a soft subscriber identity module softSIM.

In a possible implementation, the verification information is for verifying integrity of the remote attestation report, and/or the verification information is for verifying validity of the remote attestation report.

In a possible implementation, when the apparatus 1000 is configured to perform the method performed by the second apparatus in any one of the foregoing embodiments, the transceiver unit 1001 is configured to send request information, where the request information is for requesting a remote attestation report, and the remote attestation report is for remote attestation of the first apparatus. The transceiver unit 1001 is further configured to receive first information, where the first information includes the remote attestation report and verification information, and the verification information is obtained by processing the remote attestation report based on a symmetric key of a subscriber identity module SIM in the first apparatus. The processing unit 1002 is configured to verify the verification information to obtain a verification result of the remote attestation report.

In a possible implementation, the request information includes a random number; and that the verification information is obtained by processing the remote attestation report based on the symmetric key of the SIM in the first apparatus includes: The verification information is obtained by processing the remote attestation report based on a first key generated based on the symmetric key of the SIM in the first apparatus and the random number.

In a possible implementation, the first information further includes the random number.

In a possible implementation, the transceiver unit 1001 is further configured to send third information based on the first information, and receive fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting a first key, the fourth information indicates the first key, the third information includes the random number, the first key is generated based on the symmetric key of the SIM and the random number, and the verification result is obtained by performing verification based on the verification information and the first key. The processing unit 1002 is specifically configured to verify the verification information based on the fourth information, to obtain the verification result of the remote attestation report.

In a possible implementation, the remote attestation report is obtained through processing by a first module in the first apparatus. The first information further includes a first identifier, and the first identifier identifies the SIM and/or the first module.

In a possible implementation, the first module is a trusted platform module TPM; or the first module is a trusted platform control module TPCM; or the first module is a functional module in a TPM; or the first module is a functional module in a TPCM.

In a possible implementation, when the apparatus 1000 is configured to perform the method performed by the third apparatus in any one of the foregoing embodiments, the transceiver unit 1001 is configured to receive first information, where the first information includes the remote attestation report and verification information, the verification information is for verifying the remote attestation report, and the verification information is obtained by processing the remote attestation report based on a symmetric key of a subscriber identity module SIM in the first apparatus. The processing unit 1002 is configured to determine second information. The transceiver unit 1001 is further configured to send second information, where the second information indicates a verification result of the remote attestation report, and the verification result is obtained by performing verification based on the verification information.

In a possible implementation, the transceiver unit 1001 is further configured to send third information based on the first information, and receive fourth information. The third information is for requesting the symmetric key of the SIM, the fourth information indicates the symmetric key of the SIM, and the verification result is obtained by performing verification based on the verification information and the symmetric key of the SIM. Alternatively, the third information is for requesting the first key, the fourth information indicates the first key, the third information includes the random number, the first key is generated based on the symmetric key of the SIM and the random number, and the verification result is obtained by performing verification based on the verification information and the first key.

In a possible implementation, the remote attestation report is obtained through processing by a first module in the first apparatus. The first information further includes a first identifier, and the first identifier identifies the SIM and/or the first module.

In a possible implementation, the third information further includes a first identifier, and the first identifier identifies the SIM and/or the first module.

In a possible implementation, the first module is a trusted platform module TPM; or the first module is a trusted platform control module TPCM; or the first module is a functional module in a TPM; or the first module is a functional module in a TPCM.

In a possible implementation, the SIM includes a universal subscriber identity module USIM, an internet protocol media service identity module ISIM, an embedded subscriber identity module eSIM, or a soft subscriber identity module softSIM.

In a possible implementation, the verification information is for verifying integrity of the remote attestation report, and/or the verification information is for verifying validity of the remote attestation report.

In a possible implementation, when the apparatus 1000 is configured to perform the method performed by the fourth apparatus in any one of the foregoing embodiments, the transceiver unit 1001 is configured to receive third information. The processing unit 1002 is configured to determine fourth information. The transceiver unit 1001 is further configured to send the fourth information. The third information is for requesting a symmetric key of a subscriber identity module SIM, the fourth information indicates the symmetric key of the SIM, the symmetric key of the SIM is for processing a remote attestation report to obtain verification information, and the verification information is for verifying the remote attestation report. Alternatively, the third information is for requesting a first key, the fourth information indicates the first key, the third information includes a random number, the first key is generated based on a symmetric key of a SIM and the random number, the first key is for processing a remote attestation report to obtain verification information, and the verification information is for verifying the remote attestation report.

In a possible implementation, the remote attestation report is obtained through processing by a first module in the first apparatus. The third information further includes a first identifier, and the first identifier identifies the SIM and/or the first module.

In a possible implementation, the first module is a trusted platform module TPM; or the first module is a trusted platform control module TPCM; or the first module is a functional module in a TPM; or the first module is a functional module in a TPCM.

In a possible implementation, the SIM includes a universal subscriber identity module USIM, an internet protocol media service identity module ISIM, an embedded subscriber identity module eSIM, or a soft subscriber identity module softSIM.

In a possible implementation, the verification information is for verifying integrity of the remote attestation report, and/or the verification information is for verifying validity of the remote attestation report.

It should be noted that, for content such as an information execution process of a unit of the apparatus 1000 and corresponding technical effect, refer to the descriptions in the foregoing method embodiments of this application. Details are not described herein again.

FIG. 11 is another diagram of a structure of an apparatus 1100 according to this application. The apparatus 1100 includes at least an input/output interface 1102. The apparatus 1100 may be a chip or an integrated circuit.

Optionally, the apparatus further includes a logic circuit 1101.

The transceiver unit 1001 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

In addition, the logic circuit 1101 and the input/output interface 1102 may perform the method performed by any device (for example, the first apparatus, the second apparatus, the third apparatus, or the fourth apparatus) in the foregoing method embodiments, and implement corresponding beneficial effect. Details are not described herein again.

Optionally, the processing unit 1002 shown in FIG. 10 may be the logic circuit 1101 in FIG. 11. The logic circuit 1101 may be a processing apparatus, and some or all of functions of the processing apparatus may be implemented by software. A part or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

FIG. 12 shows an apparatus 1200 in the foregoing embodiment according to an embodiment of this application. The apparatus 1200 may be specifically the first apparatus, second apparatus, the third apparatus, or the fourth apparatus in the foregoing embodiments.

In a possible diagram of a logical structure of the apparatus 1200, the apparatus 1200 may include but is not limited to at least one processor 1201 and a communication port 1202.

Further, optionally, the apparatus may include at least either of a memory 1203 and a bus 1204. In this embodiment of this application, the at least one processor 1201 is configured to perform control processing on an action of the apparatus 1200.

In addition, the processor 1201 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the apparatus 1200 shown in FIG. 12 may be specifically configured to implement steps implemented by any device (for example, the first apparatus, the second apparatus, the third apparatus, or the fourth apparatus) in the foregoing method embodiments, and implement technical effect corresponding to a terminal device. For a specific implementation of the apparatus shown in FIG. 12, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method according to a possible implementation of any apparatus (for example, the first apparatus, the second apparatus, the third apparatus, or the fourth apparatus) in the foregoing method embodiments.

An embodiment of this application further provides a computer program product (or referred to as a computer program) that stores one or more computers. When the computer program product is executed by the processor, the processor performs the method according to a possible implementation of any apparatus (for example, the first apparatus, the second apparatus, the third apparatus, or the fourth apparatus) in the foregoing method embodiments.

An embodiment of this application further provides a chip system. The chip system includes at least one processor, configured to support a terminal device in implementing a function in a possible implementation of any apparatus (for example, the first apparatus, the second apparatus, the third apparatus, or the fourth apparatus) in the foregoing method embodiments.

Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

In a possible design, the chip system may further include a memory. The memory is configured to store program instructions and data that are necessary for any apparatus in the foregoing method embodiments. The chip system may include a chip, or may include a chip and another discrete component.

An embodiment of this application further provides a system. The system includes at least two apparatuses of the first apparatus, the second apparatus, the third apparatus, and the fourth apparatus in any one of the foregoing embodiments.

In the several embodiments provided in this application, it should be understood that the disclosed system, apparatus, and method may be implemented in other manners. For example, the apparatus embodiment described above is an example. For example, the unit division is logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, or a network device) to perform all or a part of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A remote attestation method, comprising:
receiving, by a first apparatus, request information, wherein the request information is for requesting a remote attestation report, and the remote attestation report is for remote attestation of the first apparatus; and
sending, by the first apparatus, first information, wherein the first information comprises the remote attestation report and verification information, the verification information is for verifying the remote attestation report, and the verification information is obtained by processing the remote attestation report based on a symmetric key of a subscriber identity module SIM in the first apparatus.

2. The method according to claim 1, wherein the request information comprises a random number; and
that the verification information is obtained by processing the remote attestation report based on the symmetric key of the SIM in the first apparatus comprises:
the verification information is obtained by processing the remote attestation report based on a first key generated based on the symmetric key of the SIM in the first apparatus and the random number.

3. The method according to claim 2, wherein the first information further comprises the random number.

4. The method according to any one of claims 1 to 3, wherein the remote attestation report is obtained through processing by a first module in the first apparatus; and
the first information further comprises a first identifier, and the first identifier identifies the SIM and/or the first module.

5. The method according to claim 4, wherein
the first module is a trusted platform module TPM; or
the first module is a trusted platform control module TPCM; or
the first module is a functional module in a TPM; or
the first module is a functional module in a TPCM.

6. A remote attestation method, comprising:
sending, by a second apparatus, request information, wherein the request information is for requesting a remote attestation report, and the remote attestation report is for remote attestation of a first apparatus; and
receiving, by the second apparatus, second information, wherein the second information indicates a verification result of the remote attestation report, the verification result is obtained by performing verification based on verification information, and the verification information is obtained by processing the remote attestation report based on a symmetric key of a subscriber identity module SIM in the first apparatus.

7. The method according to claim 6, wherein the method further comprises:
receiving, by the second apparatus, first information, wherein the first information comprises the remote attestation report and the verification information; and
sending, by the second apparatus, the first information.

8. The method according to claim 6 or 7, wherein the request information comprises a random number; and
that the verification information is obtained by processing the remote attestation report based on the symmetric key of the SIM in the first apparatus comprises:
the verification information is obtained by processing the remote attestation report based on a first key generated based on the symmetric key of the SIM in the first apparatus and the random number.

9. The method according to claim 8, wherein the first information further comprises the random number.

10. The method according to any one of claims 6 to 9, wherein the remote attestation report is obtained through processing by a first module in the first apparatus; and
the first information further comprises a first identifier, and the first identifier identifies the SIM and/or the first module.

11. The method according to claim 10, wherein
the first module is a trusted platform module TPM; or
the first module is a trusted platform control module TPCM; or
the first module is a functional module in a TPM; or
the first module is a functional module in a TPCM.

12. A remote attestation method, comprising:
sending, by a second apparatus, request information, wherein the request information is for requesting a remote attestation report, and the remote attestation report is for remote attestation of a first apparatus;
receiving, by the second apparatus, first information, wherein the first information comprises the remote attestation report and verification information, and the verification information is obtained by processing the remote attestation report based on a symmetric key of a subscriber identity module SIM in the first apparatus; and
verifying, by the second apparatus, the verification information to obtain a verification result of the remote attestation report.

13. The method according to claim 12, wherein the request information comprises a random number; and
that the verification information is obtained by processing the remote attestation report based on the symmetric key of the SIM in the first apparatus comprises:
the verification information is obtained by processing the remote attestation report based on a first key generated based on the symmetric key of the SIM in the first apparatus and the random number.

14. The method according to claim 13, wherein the first information further comprises the random number.

15. The method according to any one of claims 12 to 14, wherein the method further comprises:
sending, by the second apparatus, third information, and receiving fourth information, wherein
the third information is for requesting the symmetric key of the SIM, the fourth information indicates the symmetric key of the SIM, and the verification result is obtained by performing verification based on the verification information and the symmetric key of the SIM; or
the third information is for requesting the first key, the fourth information indicates the first key, the third information comprises the random number, the first key is generated based on the symmetric key of the SIM and the random number, and the verification result is obtained by performing verification based on the verification information and the first key; and
verifying, by the second apparatus, the verification information to obtain the verification result of the remote attestation report comprises:
verifying, by the second apparatus, the verification information based on the fourth information to obtain the verification result.

16. The method according to any one of claims 12 to 15, wherein the remote attestation report is obtained through processing by a first module in the first apparatus; and
the first information further comprises a first identifier, and the first identifier identifies the SIM and/or the first module.

17. The method according to claim 16, wherein
the first module is a trusted platform module TPM; or
the first module is a trusted platform control module TPCM; or
the first module is a functional module in a TPM; or
the first module is a functional module in a TPCM.

18. A remote attestation method, comprising:
receiving, by a third apparatus, first information, wherein the first information comprises the remote attestation report and verification information, the verification information is for verifying the remote attestation report, and the verification information is obtained by processing the remote attestation report based on a symmetric key of a subscriber identity module SIM in the first apparatus; and
sending, by the third apparatus, second information, wherein the second information indicates a verification result of the remote attestation report, and the verification result is obtained by performing verification based on the verification information.

19. The method according to claim 18, wherein before sending, by the third apparatus, the second information, the method further comprises:
sending, by the third apparatus, third information, and receiving fourth information, wherein
the third information is for requesting the symmetric key of the SIM, the fourth information indicates the symmetric key of the SIM, and the verification result is obtained by performing verification based on the verification information and the symmetric key of the SIM; or
the third information is for requesting a first key, the fourth information indicates the first key, the third information comprises a random number, the first key is generated based on the symmetric key of the SIM and the random number, and the verification result is obtained by performing verification based on the verification information and the first key.

20. The method according to claim 18 or 19, wherein the remote attestation report is obtained through processing by a first module in the first apparatus; and
the first information further comprises a first identifier, and the first identifier identifies the SIM and/or the first module.

21. The method according to claim 20, wherein the third information further comprises the first identifier, and the first identifier identifies the SIM and/or the first module.

22. The method according to claim 20 or 21, wherein
the first module is a trusted platform module TPM; or
the first module is a trusted platform control module TPCM; or
the first module is a functional module in a TPM; or
the first module is a functional module in a TPCM.

23. A remote attestation method, comprising:
receiving, by a fourth apparatus, third information; and
sending, by the fourth apparatus, fourth information, wherein
the third information is for requesting a symmetric key of a subscriber identity module SIM, the fourth information indicates the symmetric key of the SIM, the symmetric key of the SIM is for processing a remote attestation report to obtain verification information, and the verification information is for verifying the remote attestation report; or
the third information is for requesting a first key, the fourth information indicates the first key, the third information comprises a random number, the first key is generated based on a symmetric key of a SIM and the random number, the first key is for processing a remote attestation report to obtain verification information, and the verification information is for verifying the remote attestation report.

24. The method according to claim 23, wherein the remote attestation report is obtained through processing by a first module in the first apparatus; and
the third information further comprises a first identifier, and the first identifier identifies the SIM and/or the first module.

25. The method according to claim 24, wherein
the first module is a trusted platform module TPM; or
the first module is a trusted platform control module TPCM; or
the first module is a functional module in a TPM; or
the first module is a functional module in a TPCM.

26. An apparatus, comprising a processing unit and a transceiver unit, wherein
the processing unit and the transceiver unit are configured to perform the method according to any one of claims 1 to 5; or
the processing unit and the transceiver unit are configured to perform the method according to any one of claims 6 to 11; or
the processing unit and the transceiver unit are configured to perform the method according to any one of claims 12 to 17; or
the processing unit and the transceiver unit are configured to perform the method according to any one of claims 18 to 22; or
the processing unit and the transceiver unit are configured to perform the method according to any one of claims 23 to 25.

27. An apparatus, comprising at least one processor, wherein the at least one processor is coupled to a memory, and the memory is configured to store a program or instructions; and
the at least one processor is configured to execute the program or instructions to enable the apparatus to implement the method according to any one of claims 1 to 5, or enable the apparatus to implement the method according to any one of claims 6 to 11, or enable the apparatus to implement the method according to any one of claims 12 to 17, or enable the apparatus to implement the method according to any one of claims 18 to 22, or enable the apparatus to implement the method according to any one of claims 23 to 25.

28. A system, comprising at least two apparatuses of a first apparatus, a second apparatus, a third apparatus, and a fourth apparatus, wherein
the first apparatus is configured to perform the method according to any one of claims 1 to 5, the second apparatus is configured to perform the method according to any one of claims 6 to 11, or the second apparatus is configured to perform the method according to any one of claims 12 to 17, the first apparatus is configured to perform the method according to any one of claims 18 to 22, and the first apparatus is configured to perform the method according to any one of claims 23 to 25.

29. A computer-readable storage medium, wherein the medium stores instructions; and
when the instructions are executed by a computer, the method according to any one of claims 1 to 25 is implemented.

30. A computer program product, wherein the computer program product comprises computer instructions; and
when a part or all of the computer instructions are run on a computer, the method according to any one of claims 1 to 25 is performed.

31. A chip, wherein the chip comprises a processor and a communication interface, wherein
the communication interface is coupled to the processor, and the processor is configured to run a computer program or instructions, to implement the method according to any one of claims 1 to 25.
